(19) Europäisches Patentamt
European Patent Office
Office européen des brevets

(11) **EP 1 965 929 B1**

(12) **FASCICULE DE BREVET EUROPEEN**

(45) Date de publication et mention
de la délivrance du brevet:
**12.05.2010 Bulletin 2010/19**

(21) Numéro de dépôt: **06847156.4**

(22) Date de dépôt: **28.12.2006**

(51) Int Cl.:
***B07C 5/34*** *(2006.01)*

(86) Numéro de dépôt international:
**PCT/FR2006/002900**

(87) Numéro de publication internationale:
**WO 2007/077367 (12.07.2007 Gazette 2007/28)**

(54) **PROCEDE ET MACHINE AUTOMATIQUES D'INSPECTION ET DE TRI D'OBJETS SELON LEUR EPAISSEUR**

VERFAHREN UND MASCHINE ZUM AUTOMATISCHEN INSPIZIEREN UND SORTIEREN VON OBJEKTEN GEMÄSS IHRER DICKE

METHOD AND MACHINE FOR AUTOMATICALLY INSPECTING AND SORTING OBJECTS ACCORDING TO THEIR THICKNESS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.12.2005 FR 0513507**

(43) Date de publication de la demande:
**10.09.2008 Bulletin 2008/37**

(73) Titulaire: **Pellenc Selective Technologies**
**84120 Pertuis (FR)**

(72) Inventeur: **BOURELY, Antoine**
**F-84240 La Tour d'Aigues (FR)**

(74) Mandataire: **Nuss, Pierre et al**
**Cabinet Nuss**
**10 Rue Jacques Kablé**
**67080 Strasbourg Cedex (FR)**

(56) Documents cités:
**WO-A-96/23604      FR-A- 2 697 450**
**GB-A- 2 278 440**

## Description

La présente invention concerne le domaine de la caractérisation et de la séparation physique consécutive en plusieurs catégories d'objets, d'articles, de produits ou analogues mélangés, plus particulièrement la réalisation d'un tri automatique en temps réel d'un flux défilant de tels objets, articles et/ou produits.

La présente invention à pour objets un procédé et une machine automatiques d'inspection et de tri d'objets non métalliques appartenant à au moins deux catégories différentes, notamment d'épaisseurs différentes.

On connaît déjà de nombreux procédés et dispositifs automatiques d'inspection et de tri, utilisant différents types de rayonnements électromagnétiques et analysant le rayonnement réfléchi ou traversant au niveau du flux d'objets défilants. Une machine de ce type est notamment divulguée dans le brevet français n° 2 822 235 et la demande de brevet PCT n° WO 02/074452 au nom de la société Pellenc.

Les procédés et dispositifs de caractérisation automatique connus du type précité ne permettent pas de réaliser une différenciation d'objets ou d'articles de structures différentes, mais présentant en surface un même matériau constitutif.

De plus, les zones d'application des rayonnements et de mesure étant confondues, il en résulte des problèmes d'encombrement du fait du regroupement en un volume réduit à la fois des moyens d'application du rayonnement incident et de mesure du rayonnement réfléchi ou transmis.

En outre, bien que ces solutions connues soient relativement performantes, elles nécessitent des types de rayonnements particuliers et donc des émetteurs et des récepteurs spécifiques et d'un prix de revient élevé.

Le problème général posé à la présente invention consiste par conséquent à proposer une solution permettant de surmonter les inconvénients précités.

Par ailleurs, on connaît les principes et certaines applications de la thermographie, c'est-à-dire la technologie qui exploite la chaleur rayonnée par les corps.

Un corps à température ambiante rayonne à une longueur d'onde voisine de 10 $\mu$m, et ce d'autant plus fort qu'il s'échauffe. A 300-400 °C, il émet vers 5 $\mu$m. On détecte une intensité, qui varie très vite avec la température, et on la convertit en une image noir et blanc. On obtient ainsi une image dans laquelle les objets les plus brillants sont les plus chauds.

Depuis quelques années, la technologie thermographique a radicalement évolué, et ce surtout dans la bande 3 (7 à 12 $\mu$m) : on dispose à présent de nouvelles générations de caméras de prix modéré, par exemple de type thermométrique à microbolomètres, qui présentent des caractéristiques très intéressantes :

- elles fonctionnent sans dispositifs de refroidissement ;
- les résolutions disponibles en température sont très fines, environ 0,1 °C, voire 0,01 °C. Aucun système n'étant parfaitement à l'équilibre thermique, surtout pour des écarts de température faibles, le contraste entre les différents objets d'une scène est bon ;
- les résolutions spatiales sont bonnes : 320 x 240 pixels est une donnée courante ;
- les temps de réponse sont compatibles avec les débits vidéo, soit 25 images/sec.

Dans le contexte de la thermographie active, qui est celle de la présente invention et dans le cadre de laquelle on mesure des températures après avoir soumis les produits à analyser à une même impulsion de chaleur, différentes réalisations et applications sont déjà connues.

Une application classique de la thermographie est le contrôle de qualité des soudures ou des collages en métallurgie. Le brevet US 4 996 426 présente une méthode pour détecter la présence de craquelures ou de mauvais collages à l'intérieur de matériaux laminaires, surtout métalliques. Il propose le transfert de l'image thermique de la pièce (plane) par contact sur un rouleau de mousse de polymère. Les points chauds (montage en réflexion) ou les points froids (montage en transmission) signalent des ruptures de conductivité et donc des défauts de continuité dans le matériau. La mesure est dynamique : le défaut n'est bien visible que dans une fenêtre de temps courte, entre l'arrivée du flux thermique sur lui et son contournement complet par ce même flux. Dès que la chaleur fournie est homogénéisée dans le matériau, le défaut n'est plus visible. La méthode peut être étendue à l'estimation de la profondeur des défauts, mais la dynamique de réponse dépend alors de la forme et de la nature du défaut.

Le brevet US 6 914 678 emploie aussi, pour détecter des défauts, un laser piloté par un système de balayage, se déplaçant à vitesse constante sur la totalité de la surface de l'objet à inspecter, et examinant la température à une distance donnée et fixe de la zone chauffée, donc après un délai fixe. Ce document insiste sur le réglage précis nécessaire pour ce délai en fonction du matériau.

Ces technologies ont été transférées dans les années 1990 pour le contrôle qualité des produits du bois, comme des plaques de contreplaqué. Les temps de transfert sont, dans cette application, sensiblement plus longs que pour les métaux, et les échauffements des produits sont de l'ordre de 5°C. Cependant, le principe est identique, et le défaut cesse d'être visible après homogénéisation de la température dans le matériau. La méthode a été étendue aux produits alimentaires (chocolats aux noisettes, bonbons) avec détection de corps étrangers insérés dans la masse du produit.

La thermographie peut aussi être appliquée à la détection de corps étrangers difficiles à distinguer autrement. Ainsi, le dépôt DE 43 17 513 propose la détection dans un flux de pommes de terre de mottes de terre et de pierres. C'est la polarisation de la radiation thermique réfléchie qui évolue différemment en fonction de la densité des produits considérés, et elle est mesurée par réflexion, donc simultanément avec l'échauffement.

La thermographie peut aussi être utilisée pour mesurer des épaisseurs de parois, comme décrit dans le document "Métrologie thermique : des matériaux jusqu'aux structures", auteur : J.C. Krapez, 23 juin 1999. Dans ce document, il est proposé de mesurer l'échauffement après une impulsion thermique en surface et une stabilisation de température. La méthode est qualifiée de lente, car elle s'adresse à des pièces de plusieurs millimètres d'épaisseur. D'autres méthodes sont proposées pour accélérer la lecture par analyse du profil temporel d'échauffement, mais elles imposent d'acquérir et de traiter de nombreuses images thermiques.

Par ailleurs, d'autres applications de la thermographie sont décrites dans les documents suivants :

- GB-A-2 278 440 décrit un système permettant de trier des produits de natures différentes (diamants/cailloux ou graviers) en fonction de leur émissivité respective. Sa mise en oeuvre requiert une température uniforme des produits avant traitement.
- WO 96/23604 décrit un système de séparation de produits réalisant un chauffage préalable desdits produits et ensuite une ségrégation de ces derniers en fonction de la situation de leur température par rapport à des plages de températures prédéterminées. Toutefois, ce document ne précise absolument pas sur quelles bases repose la discrimination réalisée.
- FR-A-2 697 450 divulgue un procédé et un dispositif de triage de produits végétaux. Le facteur discriminateur est le taux d'humidité qui permet de différencier les bons produits (fruits et légumes) des produits à éliminer (noyaux, tiges, parties lignifiées) en fonction de leur nature (taux important/taux faible).
- US-A-2002/0027943 propose un système et un procédé de tri d'emballages en fonction de leur nature (matériau constitutif). Il est fait état d'un chauffage prolongé dont le coût énergétique à l'usage est rédhibitoire et qui n'autorise pas des cadences élevées.

Il ressort de l'analyse de l'état de la technique ci-dessus qu'aucun des documents précités n'évoque spécifiquement le traitement de produits de très faible épaisseur, notamment de l'ordre du millimètre, ou inférieure au mm. Les milieux analysés dans le cadre de ces publications antérieures apparaissent comme étant soit semi-infinis à l'échelle de temps de la mesure (le flux thermique n'a pas atteint la paroi opposée de l'objet avant la mesure), soit assez épais pour que l'énergie thermique ne soit pas encore uniformément répartie dans le produit. La plupart des méthodes mises en oeuvre sont donc relativement complexes et longues, et font appel à l'enregistrement de profils temporels de température.

La présente invention vise à proposer une solution fiable, simple et peu gourmande en énergie, pour utiliser les propriétés de la thermographie appliquée à des produits relativement fins ou à couche superficielle fine, dans le contexte de la caractérisation et de la séparation en temps réel d'objets, d'articles ou de produits de même nature se présentant sous forme de flux défilant.

A cet effet, la présente invention a pour objet un procédé automatique d'inspection et de tri d'objets non métalliques, appartenant à au moins deux catégories différentes et défilant selon un flux sensiblement monocouche sur un plan de convoyage d'un convoyeur, ledit procédé consistant essentiellement à soumettre temporairement une couche superficielle ou extérieure desdits objets au rayonnement calorique d'au moins un moyen de chauffage à distance, de manière à délivrer à chacun de ces objets défilants une impulsion thermique non altérante, qui est identique pour tous les objets en termes d'énergie thermique appliquée par unité de surface dans le plan de convoyage, puis à acquérir au moins une image thermique de chacun desdits objets par l'intermédiaire d'au moins un capteur thermique linéaire ou matriciel, par exemple une caméra thermique, ce après écoulement d'une durée déterminée suite à l'application de l'impulsion thermique, à classer ou à catégoriser ensuite chaque objet défilant en fonction des données contenues dans son ou ses image(s) thermique(s) et à délivrer un signal de commande ou d'actionnement pour chaque objet et, enfin, à séparer les objets défilants en fonction de leur classe ou catégorie et/ou du signal de commande ou d'actionnement délivré correspondant, procédé **caractérisé :**

en ce que les données de l'image ou des images thermique(s) de chaque objet défilant sont traitées pour réaliser une discrimination ou une caractérisation des objets en termes d'épaisseur de la couche superficielle affectée par le rayonnement, le matériau constitutif de ladite couche superficielle au moins des objets défilants étant identique pour tous les objets, en ce que, pour un objet donné, la durée s'écoulant entre l'application du ou des rayonnement(s) chauffant(s) et la ou les prise(s) de vue(s) thermique(s) est, d'une part, suffisante pour aboutir à une répartition sensiblement homogène de l'énergie calorique absorbée dans ladite couche superficielle, de telle manière que la différence de température après échauffement en surface desdits objets, soit sensiblement inversement proportionnelle à l'épaisseur de cette couche superficielle, tout en étant, d'autre part, suffisamment courte pour que les phénomènes de diffusion thermique latérale, de refroidissement par rayonnement et de convection soient négligeables.

L'invention concerne également une machine automatique d'inspection et de tri d'objets non métalliques, telle que ressortant de la revendication 12.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une représentation schématique partielle en perspective d'une machine selon une première variante de réalisation de l'invention pour la mise en oeuvre du procédé selon l'invention,
la figure 2 est une vue de détail en coupe montrant le moyen de chauffage et une partie du plan de convoyage de la machine représentée sur la figure 1 ;
la figure 3 est une représentation schématique en perspective d'une deuxième variante de réalisation de la machine selon l'invention, et,
la figure 4 est une vue similaire à la figure 2 d'une autre variante de réalisation des moyens d'éclairage faisant partie de la machine selon l'invention.

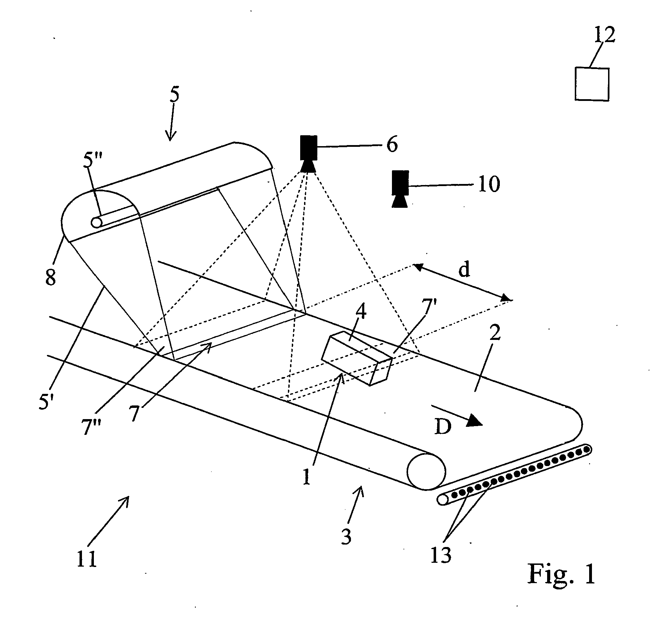

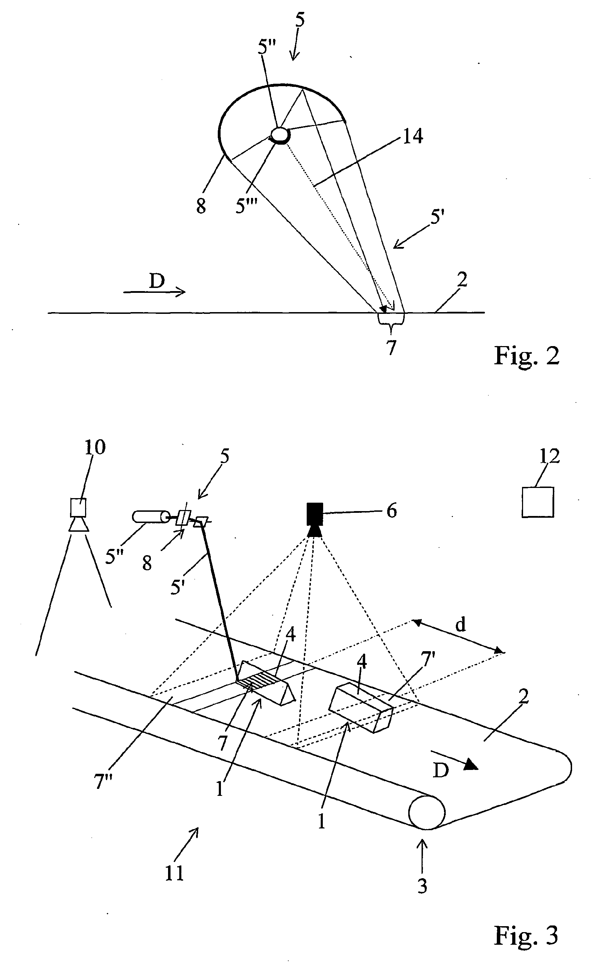

L'invention concerne, comme l'illustrent les figures 1 et 3 notamment des dessins annexés, un procédé automatique d'inspection et de tri d'objets 1 non métalliques, appartenant à au moins deux catégories différentes et défilant selon un flux sensiblement monocouche sur un plan de convoyage 2 d'un convoyeur 3, en vue de réaliser au moins un type de discrimination ou de caractérisation au niveau de ces objets en fonction d'au moins une caractéristique constitutive ou constructive de ces derniers.

Plus particulièrement, ce procédé consiste essentiellement à soumettre temporairement une couche superficielle ou extérieure 4 desdits objets 1 au rayonnement calorique d'au moins un moyen 5 de chauffage à distance, de manière à délivrer à chacun de ces objets défilants 1 une impulsion thermique non altérante, qui est identique pour tous les objets en termes d'énergie thermique appliquée par unité de surface dans le plan de convoyage 2, puis à acquérir au moins une image thermique de chacun desdits objets par l'intermédiaire d'au moins un capteur thermique 6 linéaire ou matriciel, par exemple une caméra thermique, ce après écoulement d'une durée déterminée suite à l'application de l'impulsion thermique, à classer ou à catégoriser ensuite chaque objet défilant 1 en fonction des données contenues dans son ou ses image(s) thermique(s) et à délivrer un signal de commande ou d'actionnement pour chaque objet et, enfin, à séparer les objets défilants 1 en fonction de leur classe ou catégorie et/ou du signal de commande ou d'actionnement délivré correspondant.

Conformément à l'invention, ce procédé est **caractérisé en ce que** les données de l'image ou des images thermique(s) de chaque objet défilant 1 sont traitées pour réaliser une discrimination ou une caractérisation des objets en termes d'épaisseur de la couche superficielle 4 affectée par le rayonnement, le matériau constitutif de ladite couche superficielle 4 au moins des objets défilants 1 étant identique pour tous les objets.

Ce procédé est également **caractérisé en ce que**, pour un objet 1 donné, la durée s'écoulant entre l'application du ou des rayonnement(s) chauffant(s) et la ou les prise(s) de vue(s) thermique(s) est suffisante pour aboutir à une répartition sensiblement homogène de l'énergie calorique absorbée dans ladite couche superficielle 4, de telle manière que la différence de température après échauffement en surface desdits objets, soit sensiblement inversement proportionnelle à l'épaisseur de cette couche superficielle 4, tout en étant suffisamment courte pour que les phénomènes de diffusion thermique latérale; de refroidissement par rayonnement et de convection soient négligeables.

Par "négligeables", on caractérise dans la présente des phénomènes dont les influences n'affectent pas ou très peu les données fournies par les images thermiques et les résultats de l'exploitation de ces images (typiquement moins de 10 %, voire moins de 5 % de variation dans les données fournies).

En accord avec une variante de réalisation très avantageuse, la discrimination ou la caractérisation desdits objets défilants 1 est réalisée sur la base de données différentielles, ou par exploitation différentielle de données, obtenues soit à partir d'images thermiques prises avant et après application du rayonnement calorique émis par le moyen de chauffage 5, soit à partir de la seule image thermique prise après application.

De manière préférée, l'impulsion thermique peut affecter la couche superficielle 4 exposée de chaque objet défilant 1 sur toute sa surface ou seulement par zones.

Les données d'intensité fournies par les images thermiques permettent directement de réaliser une discrimination et donc un tri entre les différentes catégories d'objets défilants.

En relation avec une caractéristique typique du procédé selon l'invention, la couche superficielle 4 concernée pour réaliser la discrimination ou la catégorisation des objets 1 présente une épaisseur supérieure à 20 $\mu$m, avantageusement comprise entre 20 $\mu$m et 2 mm, préférentiellement comprise entre 30 $\mu$m et 1 mm, et la durée s'écoulant entre l'application du rayonnement calorique et la prise de vue thermique est de l'ordre de quelques dixièmes de seconde, préférentiellement comprise entre 50 ms et 600 ms, plus préférentiellement entre 250 et 400 ms.

Lorsqu'il peut être garanti que tous les objets 1 destinés à être traités par le procédé présentent, au moins au niveau de leur(s) couche(s) extérieure(s), une température identique et homogène, il est possible de s'affranchir de la prise de vue thermique avant application de l'impulsion thermique, et la discrimination ou la caractérisation des objets défilants est alors réalisée sur la base des seules images thermiques prises après chauffage contrôlé desdits objets par le moyen 5 correspondant, l'état thermique de départ ou initial étant identique pour tous les objets 1.

Toutefois, afin de pouvoir réaliser une discrimination thermographique fiable quel que soit l'état thermique des différents objets 1 à analyser avant l'application du rayonnement du moyen de chauffage, c'est-à-dire même lorsque les divers objets présentent des états thermiques initiaux différents, le procédé peut consister à prendre une image thermique partielle ou totale de chaque objet défilant 1 avant son exposition au rayonnement du moyen de chauffage 5, la discrimination ou la caractérisation desdits objets défilants 1 étant réalisée sur la base des données différentielles obtenues à partir desdites images thermiques prises avant et après application du rayonnement calorique émis par le moyen de chauffage 5, les images avant et après exposition étant prises par le même capteur thermique 6 ou par deux capteurs différents.

En accord avec un premier mode de réalisation pratique de l'invention, ressortant des figures 1 et 2 des dessins annexés, le dépôt d'énergie calorique résultant de l'application du rayonnement 5' émis par le moyen de chauffage 5 est sensiblement uniforme et homogène sur toute la surface exposée 7 au niveau du plan de convoyage 2. Une telle disposition nécessite la mise en oeuvre d'un moyen de chauffage 5 adéquat ainsi qu'un positionnement déterminé de ce moyen par rapport au plan de convoyage 2.

En accord avec un second mode de réalisation pratique de l'invention, ressortant de la figure 3 des dessins annexés, le dépôt d'énergie calorique effectué par le rayonnement 5' émis par le moyen de chauffage 5 est de nature discontinue et limité à des zones localisées de la surface exposée 7 au niveau du plan de convoyage 2, telles que par exemple des segments de lignes ou de bandes s'étendant dans la direction de défilement des objets ou de déplacement du convoyeur 3, éventuellement circonscrit aux régions correspondant à des objets 1 en défilement.

La réalisation d'une telle application discontinue de l'énergie calorique dans la zone exposée ou zone de chauffage 7 du plan de convoyage peut être obtenue en mettant en oeuvre soit une source de rayonnement à émission discontinue ou intermittente, soit une source à émission continue ou constante dont le rayonnement est interrompu spatialement par un élément intermédiaire (masque) entre la source et le plan de convoyage. La première solution permet bien entendu de réaliser un gain en puissance consommée.

En relation avec le second mode de réalisation précité, il peut être avantageusement prévu que la discrimination ou la caractérisation de chaque objet défilant 1 est réalisée sur la base de la seule image thermique prise après exposition, par exploitation différentielle des données des zones irradiées et non irradiées de la surface, et donc de la couche superficielle 4, exposée de l'objet concerné.

Comme cela ressort des figures 1 à 3 des dessins annexés, la fenêtre d'application dans le plan de convoyage du rayonnement calorique définit une surface exposée 7 et donc une zone de chauffage en forme de bande, préférentiellement de faible largeur, ou de ligne s'étendant sensiblement transversalement par rapport à la direction D de déplacement du convoyeur 3 ou de défilement des objets 1.

En outre, de manière préférée, le rayonnement calorique est un rayonnement focalisé, préférentiellement du type infrarouge ou à composant infrarouge majoritaire, et est délivré par l'intermédiaire d'un moyen d'application 8 situé à une distance minimale au moins au dessus du plan de convoyage 2, en particulier au moins légèrement supérieure à la hauteur maximale des objets défilants 1.

Toujours en relation avec le second mode de réalisation précité, il peut être prévu que la part du rayonnement calorique produit par le moyen de chauffage 5 et dirigé vers le plan de convoyage 2 est bloquée par un cache réfléchissant 5''' de telle manière que l'ensemble du rayonnement émis par ledit moyen de chauffage 5 soit appliqué sur la surface exposée 7 du plan de convoyage 2 par un élément réflecteur et concentrateur faisant partie dudit moyen de chauffage 5 et formant moyen d'application 8.

En particulier lorsque le flux d'objets 1 présente une grande variété (en termes de matériaux constitutifs, structures, compositions ou autres) et/ou lorsque la discrimination ou caractérisation doit être extrêmement fiable et pouvoir se baser sur plusieurs critères et paramètres d'analyse, le procédé peut consister en outre à acquérir des données supplémentaires concernant les objets défilants 1 par l'intermédiaire d'au moins un capteur additionnel 10, par exemple choisi dans le groupe formé par les détecteurs magnétiques, les spectromètres et les caméras de vision noir et blanc ou couleur, et à combiner les résultats de l'exploitation de ces données supplémentaires aux résultats de l'exploitation des données contenues dans l'image ou les images thermique(s) pour réaliser la discrimination ou la caractérisation desdits objets défilants 1.

Lorsque ledit au moins un capteur additionnel 10 est placé en amont du moyen de chauffage 5 dans le sens du défilement des objets 1 (ou avec une fenêtre d'inspection en amont de la zone de chauffage 7), les données acquises par ce capteur 10 peuvent en variante ou de manière supplémentaire être utilisées pour commander ledit moyen de chauffage 5 lorsque ce dernier est à application discontinue.

La présente invention concerne également, comme le montrent schématiquement et partiellement les figures annexées, une machine automatique 11 d'inspection et de tri d'objets 1 non métalliques, appartenant à au moins deux catégories différentes et défilant dans un flux sensiblement monocouche sur un plan de convoyage 2 d'un convoyeur 3 (faisant également partie le cas échéant de la machine 11), permettant de réaliser au moins un type de discrimination ou de caractérisation au niveau de ces objets 1, en fonction d'au moins une caractéristique constitutive ou constructive de ces derniers.

Cette machine 11 comprend, d'une part, au moins un moyen 5 de chauffage à distance apte à soumettre temporairement une couche superficielle ou extérieure 4 desdits objets défilants 1 à son rayonnement calorique de manière à délivrer à chacun de ces objets défilants une impulsion thermique non altérante, qui est identique pour tous ces objets en termes d'énergie thermique appliquée par unité de surface dans le plan de convoyage 2, d'autre part, au moins un capteur thermique 6 linéaire ou matriciel, par exemple une caméra thermique, disposé à une distance déterminée en aval dudit au moins un moyen de chauffage 5 dans le sens de défilement et apte à acquérir au moins une image thermique de chacun desdits objets et, enfin, au moins une unité de traitement 12 apte à classer ou à catégoriser chaque objet défilant 1 en fonction des données contenues dans son ou ses image(s) thermique(s) et à délivrer un signal de commande ou d'actionnement pour chaque objet, ladite au moins une unité de traitement 12 étant reliée à au moins un moyen 13 apte à séparer lesdits objets défilants 1 en fonction de leur catégorie ou classe et du signal de commande ou d'actionnement délivré correspondant.

Cette machine est **caractérisée en ce que** la distance d séparant la zone d'application du ou de chaque rayonnement thermique, ou zone de chauffage 7, de la ou chaque zone 7' de prise de vue thermique respectivement associée est, d'une part, suffisamment longue pour que l'énergie calorique absorbée dans une couche superficielle 4 de ou du matériau constitutif de chaque objet défilant 1 présente une répartition sensiblement homogène dans cette couche et, d'autre part, suffisamment courte pour que les effets des phénomènes de diffusion thermique latérale, de refroidissement par rayonnement et de convection soient négligeables,

Elle est également **caractérisée en ce que** les données de l'image ou des images thermique(s) de chaque objet défilant 1 sont traitées pour réaliser une discrimination ou une caractérisation des objets en termes d'épaisseur de ladite couche superficielle 4, le matériau constitutif de la couche superficielle 4 au moins des objets 1 défilants étant identique pour tous les objets.

Préférentiellement, l'unité de traitement 12 réalise la discrimination ou la caractérisation desdits objets défilants 1 sur la base de données différentielles, ou par exploitation différentielle de données, obtenues soit à partir d'images thermiques prises avant et après application du rayonnement calorique émis par le moyen de chauffage 5, soit à partir de la seule image thermique prise après application.

Selon une caractéristique de l'invention, la bande du convoyeur 3 formant le plan de convoyage 2 présente une vitesse de déplacement constante et ledit au moins un moyen de chauffage 5 et ledit au moins un capteur thermique 6 sont disposés au dessus dudit plan de convoyage 2. En outre, la distance d séparant la zone d'application du ou de chaque rayonnement thermique, ou zone de chauffage 7, de la ou chaque zone 7' de prise de vue thermique respectivement associée est, d'une part, suffisamment courte pour que les effets des phénomènes de diffusion thermique latérale, de refroidissement par rayonnement et de convection soient négligeables et, d'autre part, suffisamment longue pour que l'énergie calorique absorbée dans une couche superficielle 4 de ou du matériau constitutif de chaque objet défilant 1 présente une répartition sensiblement homogène dans cette couche.

Comme le montrent également les figures des dessins annexés, le rayonnement 5' délivré par le moyen 5 de chauffage à distance est dirigé de manière à affecter une bande étroite ou une ligne du plan de convoyage 2 formant surface exposée ou zone de chauffage 7 et s'étendant sensiblement transversalement par rapport à la direction D de déplacement du convoyeur 3 ou de défilement des objets 1 et ledit rayonnement 5' est un rayonnement focalisé, préférentiellement du type infrarouge ou au moins à composante infrarouge majoritaire.

En accord avec un premier mode de réalisation de la machine 11 selon l'invention, ressortant des figures 1 et 2, le moyen de chauffage 5 est constitué par l'association, d'une part, d'une source de rayonnement 5" à foyer tubulaire ou d'un alignement de sources de rayonnement à foyers sensiblement ponctuels ou allongés avec, d'autre part, un élément 8 déflecteur et concentrateur de rayonnement 5', et les deux composants précités 5" et 8 formant ledit moyen de chauffage 5 présentent une extension profilée, s'étendent transversalement sur une partie substantielle de la largeur du plan de convoyage 2, préférentiellement sensiblement sur toute cette largeur, et réalisent en coopération mutuelle un dépôt d'énergie calorique sensiblement uniforme et homogène sur toute la surface de la zone de chauffage 7 en forme de bande du plan de convoyage 2 recevant le rayonnement focalisé.

Avantageusement, la source de rayonnement tubulaire 5" consiste en un tube radiant comportant un cache ou une couche 5''' réfléchissante, par exemple sous la forme d'un dépôt métallique, sur la surface dudit tube 5" tournée vers le plan de convoyage 2, de telle manière que sensiblement la totalité du rayonnement émis soit dirigée vers ledit plan de convoyage 2 par l'élément 8 déflecteur et concentrateur associé audit tube radiant 5", par exemple du type émettant un rayonnement dans le moyen infrarouge, préférentiellement avec des longueurs d'onde supérieures à 2000 nm.

De manière préférée, le ou les capteur(s) thermique(s) 6 effectue(nt), pour chaque objet défilant 1, une prise de vue avant et après exposition dudit objet au ou à un rayonnement calorique 5' et l'unité de traitement 12 réalise une discrimination ou une catégorisation desdits objets défilants 1 sur la base des données différentielles obtenues à partir de leurs images thermiques acquises avant et après exposition audit rayonnement calorique 5'.

En accord avec un second mode de réalisation de la machine 11 selon l'invention, représenté sur la figure 3 des dessins annexés, le moyen de chauffage 5

consiste en une source laser 5", du type à émission continue ou intermittente, associée à un dispositif 8 d'application avec balayage bidimensionnel (par exemple sous la forme de deux miroirs pivotants avec des axes perpendiculaires), le dépôt d'énergie calorique étant de nature discontinue et limité à des zones localisées de la surface exposée 7 au niveau du plan de convoyage 2, telles que par exemple des segments de lignes ou de bandes s'étendant dans la direction de défilement des objets ou de déplacement du convoyeur 3, éventuellement circonscrit aux régions correspondant à des objets 1 en défilement.

Dans le cadre de ce second mode de réalisation, l'unité de traitement 12 peut réaliser une discrimination ou une caractérisation de chaque objet défilant 1 sur la base de la seule image thermique prise après exposition, par exploitation différentielle des données des zones irradiées et non irradiées de la surface 7, et donc de la partie de la couche superficielle 4, exposée de l'objet 1 concerné.

En vue d'optimiser l'application du rayonnement calorique 5', en relation avec ledit second mode de réalisation, et donc la consommation énergique du moyen de chauffage 5 à dépôt discontinu, la machine 11 peut en outre comporter un dispositif de localisation et de délimitation de la surface apparente des objets défilants 1 sur le plan de convoyage 2 situé en amont du moyen de chauffage 5 dans le sens de défilement, les données acquises par ce dispositif de localisation et de délimitation de la surface apparente étant exploitées pour piloter ledit moyen de chauffage 5 sous forme d'un ensemble [source laser 5" / dispositif d'application 8 avec balayage].

En vue d'augmenter les performances de la machine 11 en termes de discrimination, cette dernière peut éventuellement acquérir en temps réel des données supplémentaires relatives aux objets défilants, d'une nature autre que thermique.

A cet effet, elle peut alors comporter au moins un capteur additionnel 10 choisi dans le groupe formé par les détecteurs magnétiques, les spectromètres, les caméras de vision noir et blanc ou couleur, et les résultats de l'exploitation de ces données supplémentaires sont combinés dans l'unité de traitement 12 aux résultats de l'exploitation des données contenues dans l'image ou les images thermique(s) pour réaliser la discrimination ou la caractérisation desdits objets défilants 1.

Le dispositif précité de localisation et de délimitation/distinction des objets 1 peut éventuellement consister en un tel capteur 10 additionnel placé en amont de la zone de chauffage 7.

Il est bien entendu que la machine 11 comporte par ailleurs, en plus des moyens décrits explicitement ci-dessus et illustrés sur les figures, tous les autres moyens (matériels et logiciels) nécessaires pour la mise en oeuvre du procédé décrit précédemment, inclusivement sa programmation par un utilisateur ou opérateur et sa communication avec d'autres installations ou systèmes.

Ces autres moyens étant connus ou à la portée de l'homme du métier, il ne seront pas décrits plus avant dans la présente.

Afin de mieux illustrer les différentes réalisations pratiques possibles pour l'invention, destinées à solutionner des types de tris différents, on décrit ci-après plus en détail plusieurs réalisations et applications concrètes du procédé et de la machine selon l'invention.

Les différentes réalisations et applications évoquées ci-après ont en commun de concerner des objets 1 en défilement rapide (1 à 3 m/s), étalés en une seule couche et stabilisés sur un convoyeur plan 3, conformément aux deux dépôts de brevets précités de la société Pellenc.

Le principe général est présenté sur les figures 1 et 3.

La machine 11 comprend au moins un moyen de chauffage 5 des objets ou produits défilants 1, qui intègre comme source 5" de rayonnement soit une source laser, soit une lampe de type thermique (Globar, lampe à incandescence, lampe halogène, lampe flash au Xénon, etc.) produisant de l'énergie située de préférence dans les longueurs d'onde supérieures à 2000 nm, l'ensemble étant fixé au dessus d'un convoyeur 3, et un moyen d'application 8 du type à déviation ou à focalisation, par exemple un miroir ou un réflecteur elliptique, qui crée une zone 7 de fort éclairage et de faible largeur sur la totalité de la largeur du convoyeur 3. Tout objet 1 en défilement sur ce convoyeur est donc soumis à une impulsion thermique de quelques millisecondes, suivant les caractéristiques du moyen de chauffage 5.

Une caméra thermique linéaire ou matricielle 6 visualise au moins une zone de mesure 7', où se fait l'acquisition d'image après diffusion de la chaleur dans la couche superficielle 4 de l'objet 1 ou produit. Une zone 7" témoin ou de référence placée avant chauffage, peut être également visualisée pour indiquer la température de surface des objets 1 avant chauffage. Si la caméra 6 est matricielle, le champ de vision peut être choisi comme indiqué sur les figures 1 et 3, de sorte que la même caméra visualise à la fois les deux zones 7' et 7". Si la caméra 6 est linéaire, la zone 7" doit être visualisée par une deuxième caméra non représentée, et de préférence identique.

La zone de chauffage 7 et la zone de prise de vue 7' postérieure sont séparées par la distance d, variable suivant l'application.

Eventuellement, un autre capteur 10 de nature différente (vision couleur, spectromètre infrarouge, etc.) peut être placé sur le même convoyeur, avant ou après la caméra 6. Les informations fournies par le capteur 10 peuvent être combinées à celle fournies par la caméra 6 pour aboutir à une classification combinée des objets 1, par un ordinateur et un algorithme appropriés (unité de traitement 12). En bout de convoyeur, on actionne certaines des buses du barreau de buses formant le moyen de séparation 13 pour éjecter les objets sélectionnés.

Les objets à trier 1 sont par exemple des papiers-cartons, des plastiques (emballages, films, sacs, déchets broyés d'origine électronique ou automobile) ou des déchets biologiques en attente de tri pour compostage ou autre traitement biologique.

Les objets 1 sont généralement stockés dans un centre de tri principalement sous deux formes, en vrac ou en balles. Ils y restent en général un temps suffisant pour que leur température de surface soit homogène, mais ce n'est pas toujours le cas, notamment en cas de stockage en extérieur (effets du soleil, de la pluie, du gel). Après chargement sur la ligne de tri intégrant la machine 11, leur température peut donc varier, dans une fourchette de un à quelques degrés. Alternativement, dans un centre de recyclage, les objets 1 peuvent être passés par une phase de lavage à chaud juste avant la zone de tri, et leur température est alors plus homogène.

Chaque objet 1 est d'abord accéléré sur le convoyeur 3, puis stabilisé. La vitesse du convoyeur est optimisée en fonction de la nature des objets 1 pour obtenir un étalement sur une seule couche, tout en évitant le glissement ou le roulement pour la grande majorité des objets. Les vitesses généralement retenues varient de 1 à 3 m/s.

Chaque objet 1 traverse d'abord la zone témoin 7", où une première image thermique peut être acquise : elle indique la température de départ de l'objet 1. L'objet se détache en général clairement par sa température plus froide sur le fond du tapis du convoyeur 3, car ce dernier est chauffé en permanence par le moyen 5, alors que l'objet ne fait qu'un passage rapide.

L'objet 1 traverse ensuite la zone 7 où il reçoit une impulsion thermique également répartie sur toute sa couche superficielle 4. Cette zone 7 a une largeur préférentielle de 5 à 10 cm. Cette largeur doit être minimisée pour caractériser au mieux l'instant de passage.

Pendant que l'objet 1 parcourt la distance d, la chaleur reçue s'homogénéise dans sa couche superficielle 4, si l'objet est fin (moins de 0,5 mm), et elle se diffuse dans la profondeur de l'objet, si celui-ci est profond ou épais (voir modélisation plus loin). La distance d est choisie en fonction de la nature des matériaux et des épaisseurs de couche superficielle des objets à trier. Son ordre de grandeur est de 100 à 600 mm. Pendant ce parcours, le refroidissement par rayonnement de la couche superficielle de l'objet a une ampleur négligeable, comme il sera montré plus loin.

Lorsque l'objet passe dans la zone 7', une deuxième image thermique est acquise, et permet de connaître la température de l'objet 1 après stabilisation thermique. La différence des températures avant et après chauffage donne l'échauffement global de l'objet 1 considéré.

Un (ou plusieurs) autre(s) capteur(s) 10, placé(s) dans la même zone, peu(ven)t apporter une information complémentaire importante, et notamment :

- la position de l'objet 1 sur le convoyeur 3, au cas où le contraste thermique soit insuffisant pour bien le localiser sur les images thermiques : le capteur 10 le plus approprié est une caméra de vision couleur ;
- d'autres critères d'aspect, notamment sa couleur et les caractéristiques de ses motifs imprimés (caméra de vision) ;
- le matériau constitutif de l'objet, fourni par exemple par un spectromètre infrarouge tel que décrit dans les deux dépôts français et PCT précités de la société Pellenc.

Si le matériau constitutif de l'objet 1 est connu, l'échauffement mesuré permet de déduire l'épaisseur de la première couche ou couche superficielle 4. On peut ainsi par exemple différencier un papier d'un carton, car ils ne diffèrent que par leur masse spécifique (plus ou moins de 224 g/m$^2$ pour les normes françaises), laquelle masse est directement liée à leur épaisseur.

Enfin, la machine 11 sous la forme d'un classificateur combiné, utilisant les informations des capteurs 6 et 10, permet de prendre une décision d'éjection ou non de chaque objet 1. On n'a représenté ici qu'une seule rangée de buses d'éjection 13, mais cet exemple n'est nullement limitatif: on peut notamment avoir un tri ternaire, avec deux rangées de buses parallèles, du même côté ou de deux côtés opposés du flux de produits ou d'objets 1.

Une variante du fonctionnement ci-dessus est de prendre plus de deux images pendant le défilement de l'objet, ce qui est facile avec une caméra matricielle. Il peut en effet être avantageux dans certains cas de disposer d'images intermédiaires, prises soit pendant la phase d'échauffement, soit pendant la phase de diffusion de chaleur.

Afin de permettre une meilleure compréhension de l'invention et d'en démontrer les fondements théoriques, il peut être avantageux d'avoir recours à une modélisation thermique des phénomènes exploités.

_Temps d'homogénéisation de la chaleur dans un objet fin_ : l'évolution d'un objet après une impulsion thermique est régie par l'équation de la chaleur, qui s'écrit, pour une seule dimension et en l'absence de sources thermiques :

$$\partial T / \partial t = \alpha. \ \partial^2 T / \partial x^2$$

Ici T est la température, t le temps écoulé, x la profondeur, et $\alpha$ la diffusivité du produit.

Dans un milieu semi-infini, c'est à dire d'épaisseur importante par rapport au temps de diffusion thermique, ce temps est donné dans la littérature par :

$T_d = e^2/4 \ \alpha$, où e est l'épaisseur atteinte par le flux thermique.

Si au bout de ce temps, on atteint la limite de la couche fine constituant l'objet, la diffusion s'arrête, et la température s'homogénéise pendant la phase suivante. On estime que ce temps d'homogénéisation, compté depuis l'impulsion thermique, est Th = 2. Td.

Dans le cas du papier-carton, α vaut 0,14 mm²/s. On trouve Td = 18 ms pour e = 100 μm, et donc Th = 36 ms.

Notons par ailleurs que si l'impulsion thermique est localisée en une seule zone de la surface, elle ne diffuse que très lentement sur les côtés. Pour 1 mm de diffusion latérale, on trouve

Td = 1,8 s, et pour 2 mm, on trouve Td = 7,2 s.

On peut donc dire que la chaleur diffuse vite (en une fraction de seconde) dans l'épaisseur de l'objet, mais que sa diffusion latérale est négligeable à notre échelle de temps. Les mêmes conclusions sont valables pour les plastiques, dont les diffusivités sont proches, et les épaisseurs un peu plus grandes (jusqu'à 500 μm, correspondant à Td = 400 ms).

Calcul d'échauffement final pour un carton fin : on prend comme capacité calorifique du papier ou carton celle du bois de pin : C = 920 kJ/m³.K. Si l'énergie totale absorbée (cas d'une machine de 800 mm de large) est de 2000 W, et si le convoyeur défile à 3 m/s, cette énergie se répartit comme suit : 2000 J/s /( 3 m/s x 0,8 m) = 833 J /m². Pour un carton de 200 μm d'épaisseur, ce flux d'énergie est réparti sur 2. 10⁻⁴ m, soit une densité volumique W = 4165 kJ/m³. L'échauffement est alors W /C = 4,5 °C. Pour un papier fin de 50 μm, le même raisonnement donne 18°C.

Il s'agit donc d'échauffements très significatifs faciles à mesurer, même avec des caméras d'entrée de gamme. Pour des produits stockés à température homogène, ces échauffements peuvent même être suffisants pour rendre inutile l'image témoin avant chauffage.

Refroidissement par rayonnement des objets chauffés :

La formule de Stefan-Boltzmann : $W = \sigma . T^4$, peut être appliquée aux objets à température ambiante, ce qui donne l'ordre de grandeur du flux réémis par rayonnement par les objets chauffés. A 300 K (27°C), W = 460 W/m², ou 0,046 W/cm².

De plus, le rayonnement reçu par l'objet de son environnement, dont la température est très proche, compense largement cette émission. On calcule le flux net en différentiant la formule autour de la température ambiante de 300 K, pour un écart de température ΔT avec le milieu environnant :

$$\Delta W = 4 . \sigma . T^3 \Delta T = 6,16. \Delta T$$

Si on prend par exemple la valeur maximale trouvée plus haut, soit la plus défavorable,

$$\Delta T = 18 \text{ °C,}$$

on trouve

$$\Delta W = 111 \text{ W/m}^2.$$

Dans ce raisonnement, on néglige le transfert de chaleur par conduction dans les couches suivantes de papier-carton : en effet, l'existence d'un espace d'air, même faible, entre les deux couches, fait que le transfert principal de chaleur se fait par rayonnement vers le bas, et non par conduction. Il faut néanmoins considérer un refroidissement sur les deux faces de cette couche superficielle, soit ici ΔW' = 222 W/m², où les m² sont ceux de la surface chauffée (une seule face).

Si la phase de chauffage a apporté environ 800 J/m² (voir plus haut), la chaleur ne s'évacue que lentement par rayonnement (en plus de 4 secondes pour le papier le plus fin, et jusqu'à une minute pour un carton épais). On peut donc négliger le refroidissement par rayonnement de ces objets entre les deux prises de vue évoquées, espacées de moins d'une demi-seconde.

Comme déjà indiqué précédemment, le moyen de chauffage 5. peut se présenter sous différentes formes de réalisation faisant chacune état d'avantages et de limitations spécifiques.

Une première possibilité de réaliser le chauffage contrôlé des objets 1 consiste à mettre en oeuvre un éclairage moyen infrarouge (MIR).

Pour assurer à la fois une faible profondeur de pénétration et une forte absorption, indépendante de la coloration et des encres, un éclairage concentré sur les longueurs d'onde supérieures à 2000 nm est souhaitable. L'absorbance dans cette gamme est supérieure à 80 % pour tous les produits organiques.

Du fait même de la forte absorption, la profondeur de pénétration des radiations est faible (Au delà de 3000 nm, atténuation de 90 % après 20 μm environ pour l'eau), ce qui garantit un chauffage superficiel. On est ainsi assuré que seule la première couche du produit est concernée par l'éclair de chaleur. Notons que ce raisonnement signifie aussi qu'un produit trop fin n'arrête pas tout le rayonnement : un sac plastique de 10 μm d'épaisseur ne captera que 10 à 50 % de l'énergie suivant les longueurs d'onde.

Le schéma d'une variante de réalisation du moyen de chauffage 5 sous la forme d'un système d'éclairage selon l'invention est présenté sur la figure 2 des dessins annexés.

On peut produire un tel éclairage avec un tube radiant cylindrique 5". Ces tubes sont des composants industriels classiques des systèmes de séchage d'encre ou des fours de fusion du verre. Leurs coûts sont modérés, et leurs durées de vie se comptent en années. Avec une température de surface de 830 °C, soit 1100 °K. On calcule suivant la loi du corps noir une énergie rayonnée W = 8,3 W/cm².

La longueur d'onde du pic d'émission est λp = 2630 nm.

On voit que cette température est adaptée à notre problème. Pour cette température, le rayonnement d'un tube de 1 cm de diamètre suffit à fournir 2500 W par mètre linéaire.

On a intérêt à concentrer l'impulsion de chaleur sur une bande étroite 7 dans l'axe de défilement des produits. Pour des raisons de circulation des produits (hauteurs de passage supérieures à 350 mm), ainsi que pour des raisons de sécurité (risque d'incendie), l'éclairage ne peut en général pas être au voisinage du convoyeur. Selon l'invention, on peut néanmoins concentrer le flux de chaleur : un réflecteur elliptique 8 est placé autour du tube 5", et il est conçu pour que l'un des foyers soit le tube lui-même, l'autre étant au voisinage du convoyeur. Ainsi, tout rayon qui passe par le réflecteur 8 est réfléchi de façon à toucher le convoyeur dans la zone 7. Si par exemple la distance du tube au fond du réflecteur est de 12 cm environ, et la distance du tube au convoyeur est de 50 cm environ, la zone 7 a une largeur d'environ 5 cm sur le plan de convoyage 2 formé par la bande du convoyeur 3.

De plus, pour les températures choisies, il est possible de métalliser une moitié du tube 5", en déposant une couche 5'" sur sa surface destinée à être tournée vers le plan de convoyage 2. Cela bloque l'essentiel de l'émission dans la zone métallisée : les rayons 14 ne sont pas émis, ou très faiblement. La chaleur rayonne alors seulement dans le demi-espace situé du côté du réflecteur 8. En métallisant le côté inférieur, on supprime tout éclairage direct, qui nuirait au caractère instantané de l'échauffement, et on force tous les rayons à passer par le réflecteur, ce qui optimise le rendement : la zone 7 reçoit la quasi-totalité de la chaleur rayonnée.

Toutefois, le mode de réalisation indiqué sur la figure 2 est purement indicatif.

Dans tous les cas où une grande distance du tube 5" au convoyeur 3 n'est pas nécessaire, on peut placer le tube au plus près du convoyeur, par exemple à environ 20 cm. Dans ce cas, on peut supprimer le réflecteur 8, et n'utiliser que la couche métallisée 5'" pour limiter l'étendue angulaire du rayonnement, éventuellement complétée par un moyen réflecteur et concentrateur. Dans ce cas, la zone 5'" aura intérêt à être placée vers le haut, et le rayonnement direct se fait vers le bas.

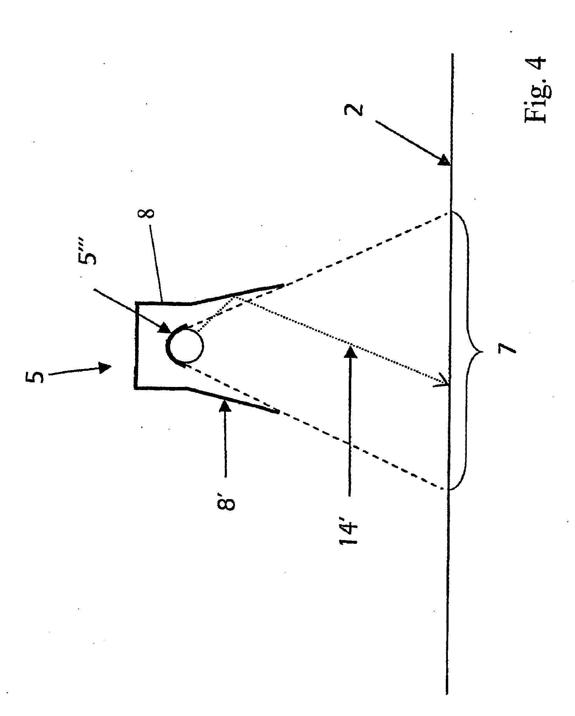

La figure 4 des dessins annexés illustre une variante de réalisation du moyen de chauffage 5, par rapport à celui représenté sur la figure 2.

La source rayonnante profilée, par exemple sous forme de tube, est pourvue d'une couche réfléchissante 5'" limitant la diffusion angulaire du rayonnement et située sur la face du tube opposée au plan de convoyage 2.

L'action de cette couche limitatrice de l'angle de diffusion peut être avantageusement complétée par un réflecteur 8 constitué par exemple de parties réfléchissantes supérieures et latérales, par exemple des portions de miroirs plans. Ces moyens permettent de diriger les rayons émis par le tube vers le plan de convoyage en les concentrant, mais sans les focaliser.

La référence 14' désigne un rayon rabattu dans la zone 7 du plan de convoyage grâce au réflecteur 8.

Une autre possibilité pour réaliser le chauffage contrôlé des objets consiste à mettre en oeuvre un éclairage halogène.

En effet, on peut produire également une impulsion thermique par un tube halogène associé à un réflecteur elliptique, tel que décrit dans la demande de brevet mentionnée ci-dessus. Cela permet d'utiliser le même éclairage pour le spectromètre infrarouge et pour la caméra thermique, et cela permet une très bonne focalisation de l'éclairage sur une bande 7 de moins de 3 cm de largeur.

Par contre, cette méthode présente plusieurs limitations :

- on ne peut pas métalliser le demi-tube 5", et la moitié de l'énergie est non focalisée. Les rayons directs qui atteignent le convoyeur 3 sans passer par le réflecteur 8 échauffent aussi les produits, mais l'instant de chauffage correspondant est mal défini ;
- l'absorbance des produits 1 n'est pas proche de 100 % dans cette gamme spectrale. Pour du papier de couleur moyenne claire ou blanche, il réfléchit ou diffuse le gros de l'énergie. L'échauffement n'est donc que de 5 % à 10 % de la valeur précédente, soit environ 0,25°C pour un carton de 200 $\mu$m, et 1°C pour un papier de 50 $\mu$m.

On se rapproche alors de la limite de détection des caméras de basse résolution, et le mode différentiel (image témoin avant chauffage) devient indispensable. Mais ce mode d'éclairage est avantageux pour minimiser le nombre d'éclairages dans une application multi-capteurs.

Une troisième possibilité pour réaliser le chauffage contrôlé dans le cadre de l'invention consiste à mettre en oeuvre un éclairage pulsé ou par impulsions répétées.

Des moyens d'échauffement existent basés sur des flashs répétitifs de courte durée (1 ms, voire 10 $\mu$s). On peut réaliser ces flashs avec des lampes au Xénon, ou des projecteurs de cinéma. Cependant, ces flashs sont en général optimisés pour fonctionner dans le domaine visible, et leur rendement en moyen infrarouge est relativement faible. Malgré cet inconvénient, ils présentent l'avantage d'un instant de chauffage parfaitement bien défini.

Une quatrième possibilité concrète pour réaliser le chauffage contrôlé des objets 1 en défilement consiste à mettre en oeuvre un éclairage par laser, préférentiellement infrarouge.

Un éclairage par laser, associé à un scanner bidimensionnel piloté, est certainement plus complexe, mais il présente plusieurs avantages par rapport à des sources thermiques comme indiqué ci-après.

Il permet tout d'abord de simplifier l'analyse différentielle d'échauffement, en la ramenant à une seule image. Si on cible un point particulier de l'objet qu'on chauffe brièvement avec le laser, on peut évaluer l'échauffement au bout d'un délai de 100 à 200 ms. Comme on l'a vu plus haut, ce temps est suffisant pour que la chaleur diffuse dans l'épaisseur de l'objet, mais pas pour une diffusion latérale. On peut donc comparer directement la zone chauffée aux zones voisines, qui sont encore à l'équilibre thermique. L'ordre de grandeur de la dimension des zones qui conviennent est de 5 à 10 mm de côté ou de diamètre, ce qui est tout à fait compatible avec des faisceaux lasers collimatés du commerce.

Une variante consiste à créer avec le laser une ligne chauffée, en laissant la ligne voisine non chauffée. Pour tenir compte du flou de défilement inévitable de la caméra thermique, dont le temps d'acquisition est de quelques millisecondes, correspondant à 10 à 20 mm de défilement, cette ligne a intérêt à être parallèle au sens d'avancement du convoyeur.

Le laser permet de concentrer l'énergie sur les zones d'intérêt, et donc de diminuer de façon importante les besoins en énergie, ainsi que les risques d'incendie associés. Si le laser est placé en aval d'un système de vision qui a localisé les objets, il peut être dirigé uniquement sur les points où des objets sont présents. En combinant avec la disposition précédente, on peut balayer des lignes parallèles à l'avancement du convoyeur 3, mais uniquement là où des objets 1 sont présents.

Ce deuxième mode de fonctionnement préférentiel est illustré par le schéma de la figure 3. Un laser 5" crée un faisceau collimaté, faisceau qui est dévié par un jeu de deux miroirs à axes perpendiculaires 8 vers un objet 1, où il décrit des lignes alternées chauffé/non chauffé, lignes de préférence parallèles à la direction d'avancement D des objets. Le laser peut fonctionner en continu ou en mode pulsé. Avant acquisition d'images, on laisse comme auparavant les objets 1 stabiliser leur température pendant le parcours de la distance d. La zone témoin 7" n'est plus nécessaire.

Avec cette réalisation, on évite tout échauffement du tapis du convoyeur 3, et on réduit drastiquement les besoins en énergie. Si on suppose un taux de remplissage du tapis de 20 % environ, et si on chauffe 50 % de la surface de chaque objet, il suffit de 10 % de l'énergie précédente pour obtenir un effet thermique équivalent. Une énergie de 200 W au lieu de 2000 W suffit donc. Si on se contente d'un "sondage" de 10 % de la surface de chaque objet, ce qui est tout à fait réaliste, il suffit de 40 W. Si on considère qu'un échauffement de 1°C dans le cas d'un produit épais (200 $\mu$m), et de 4°C pour un produit fin (50 $\mu$m) est suffisant, on réduit encore d'un facteur 4 les besoins. Le laser le plus petit qui convienne à l'application a alors une puissance de 10 W.

Enfm, de par son principe, le laser présente d'autres avantages :

- il permet par son caractère monochromatique d'agir spécifiquement sur certains matériaux, dont l'absorption peut être maximale à la longueur d'onde du laser ;
- il permet même de choisir la durée d'échauffement de l'objet en fonction d'autres critères, comme le matériau constituant, si cette indication est fournie préalablement par un autre capteur 10, comme un spectromètre infrarouge.

Dans ce qui suit on présentera différentes applications du procédé et de la machine selon l'invention, en relation avec divers types de tri d'objet.

Une première application de l'invention concerne les papiers, notamment la distinction entre les imprimés et les produits d'emballage cartonnés.

Dans cette application, on a affaire à un produit structuré (fibreux), fortement diffusant et opaque. Dans les longueurs d'onde MIR, il est très absorbant, et son émissivité est haute (> 0,9) et constante.

La distinction doit porter sur deux produits imprimés d'aspect proche :

- les cartonnettes d'emballage, dont l'épaisseur varie de 250 à 400 $\mu$m,
- les magazines et publicités : leurs feuilles internes ont des épaisseurs de 40 $\mu$m environ, mais les couvertures, que l'on voit plus fréquemment, atteignent 150 $\mu$m.

On prend pour diffusivité du papier : a = 0,14 mm$^2$/s

- cartonnettes fines : Th_c = e$^2$/2.a = 0,25$^2$/(2 x 0,14) s = 0,224 s = 224 ms.
- couvertures de magazines : Th_m = 0,16$^2$/(2 x 0,14) = 92 ms.

On prend une image après stabilisation, soit ici après 224 ms, temps d'homogénéisation le plus long des deux produits.

Avec un défilement à 3 m/s, le déplacement est d'environ 670 mm entre les deux points. Cela suffit juste à avoir les deux bandes d'image dans la même image, si on suppose une caméra de 320 x 240 pixels, avec des pixels dont l'image sur le tapis a 4 mm de côté.

On calcule un échauffement avec l'éclairage MIR d'environ 5,6 °C pour la couverture de magazine, et de 3,6 °C pour la cartonnette. La différence de ces valeurs est significative et mesurable.

Enfin, il faut tenir compte de l'influence de l'humidité : elle accroît fortement la capacité thermique, et donc est équivalente à une épaisseur plus importante. Tout papier très humide tendra donc à être confondu avec un carton. Ce cas est compatible avec les objectifs de recyclage, car les produits souillés sont non souhaités, et ils sont presque toujours mouillés. Donc, les trieurs tendent à écarter les papiers mouillés.

Enfin, pour des produits très fins, comme des feuilles de papier isolées (ou des films plastiques posés sur le convoyeur), c'est le convoyeur lui-même et sa température plus élevée qui transparaissent à travers l'objet : cela tend à faire classer le produit encore plus comme un papier. L'effet est donc favorable, sauf pour les films plastiques.

Une deuxième application de l'invention concerne les produits, notamment les emballages, réalisés en un matériau polymère (PET) multicouches.

La distinction doit ici porter avant tout sur des bouteilles transparentes non colorées, qui sont réalisées, soit en une seule couche de PET, soit en au moins trois couches juxtaposées, celle du centre étant constituée d'un matériau faisant barrière à un gaz ($O_2$ ou $CO_2$). Ce matériau est par exemple du nylon. Un autre cas de figure, proche mais plus simple, est la présence d'étiquettes ou de manchons plastiques en surface, même après lavage. Dans ce cas, il faut caractériser la présence de l'étiquette en surface.

Après chauffage d'un multicouche, la chaleur pénètre surtout la première épaisseur (couche superficielle). En effet, les couches ne sont pas solidarisées, et la conduction est très limitée vers la deuxième couche. Le phénomène est accentué par le fait que pendant le chauffage, la discontinuité optique crée une réflexion vers le haut d'une partie de l'énergie incidente.

Une bouteille monocouche a généralement une épaisseur d'environ 400 $\mu$m. Si elle est tricouche, la couche centrale est mince, soit environ 20 $\mu$m, et elle sépare deux couches d'environ 190 $\mu$m chacune.

- monocouche : Th_m = $e^2/2.a = 0,4^2/(2 \times 0,14)$ s = 0,571 s = 571 ms.
- tricouche (première couche) : Th_t = $0,19^2/(2 \times 0,14)$ = 129 ms.

Il faut donc attendre au moins 250 ms pour différencier les deux cas, et idéalement 570 ms, correspondant à un déplacement de 1500 mm. Cette dernière valeur empêche de traiter les deux images avec la même caméra 6.

Ceci dit, on peut travailler en sortie de lavage, effectué typiquement à 95 °C, sur le refroidissement naturel des objets vers 30°C. La bouteille tricouche se refroidit en surface plus vite que la monocouche. On n'a alors besoin que d'une seule image.

Une troisième application de l'invention concerne le tri des sacs et films en matière plastique.

Les films plastiques sont la plupart du temps réalisés en polyoléfines, type PE ou PP, et sont difficiles à différencier par spectroscopie des objets massifs faits des mêmes matériaux. Notamment, les PEHD avec couche interne de noir de carbone, un type de multicouches particulier, ont des spectres très proches des sacs plastiques PELD. On peut alors, comme pour le cas précédent, les trier via les différences d'épaisseur, qui sont très significatives. Ce type de tri vient en complément d'un spectromètre infrarouge qui a déjà déterminé la présence de PE (LD ou HD). Comme leur inertie thermique est faible, l'acquisition d'images doit se faire rapidement après la zone de chauffage pour un contraste idéal, avant la stabilisation totale des bouteilles en PEHD.

Une quatrième application de l'invention concerne l'épuration de composts.

Tout d'abord, un flux de produits organiques majoritaire est obtenu par criblage à partir d'un flux d'ordures brutes. En général, une maille de 80 mm permet d'obtenir du côté des fines (fraction passante) un flux concentré à plus de 80 % en matière organique (déchets de repas, de cuisine, déchets verts), donc fortement aqueux.

Deux types de polluants se rencontrent principalement :

- des légers, type plastiques (souples ou rigides), et des papiers, plus ou moins souillés ;
- des lourds : verre, pierres, métaux, cendres.

On procède à nouveau en deux images successives pour visualiser les échauffements.

Les produits concernés sont presque tous opaques et absorbent donc bien le rayonnement calorique, et ce dans une couche superficielle étroite.

Les produits biologiques sont assimilables à une peau recouvrant une masse d'eau captive. Ils diffusent assez lentement (diffusivité de l'eau = 0,14 $mm^2$/s). Leur épaisseur est au moins de 1 mm. La capacité thermique de l'eau est la plus élevée de tous les corps courants. Ces produits ont donc une température d'équilibre plus basse.

Les minéraux et les verres ont une capacité thermique plus faible que l'eau. Cependant, ils sont toujours épais (> 2 mm), et diffusent au moins quatre fois plus vite que l'eau : ils deviennent donc rapidement plus froids que l'eau, et ceci est visible dès la phase de chauffage.

Les métaux ont une réflectivité forte (90 à 95 %), et ils s'échauffent très peu. De plus, leur émissivité est faible, et pour un échauffement donné, ils émettent très peu de rayonnement : ils apparaissent donc quasiment noirs. Ceci est vrai dès la photo témoin (avant chauffage), s'ils sont en équilibre thermique.

Les légers sont très sensibles à un échauffement type MIR, comme déjà indiqué précédemment : ils ont peu de capacité thermique, et ils sont fins. Ensuite, ils diffusent peu, et gardent une température quasi-constante sur plusieurs secondes.

Si on représente par ordre décroissant les échauffements entre les deux images, on aura donc :

- les plus chauds : les plastiques et les papiers ;
- les produits biologiques, modérément échauffés ;
- les minéraux et les verres, peu échauffés ;
- les métaux, quasiment noirs, et ce dès la première image.

La stratégie est un peu différente des cas précédents : on attend un temps suffisant pour stabiliser les papiers, soit environ 200 à 250 ms. Les autres produits ne sont pas encore stabilisés. Par contre, même les plastiques sont déjà beaucoup plus chauds que les produits aqueux, car la capacité calorifique de l'eau a fait baisser la température de ces derniers. Pour les mêmes raisons, les verres, minéraux et métaux sont nettement plus froids et/ou sombres que les produits aqueux.

On décide ensuite d'éjecter tous les produits très chauds et très froids, en conservant les produits de valeur intermédiaire. On voit que ce type de tri peut n'utiliser comme seul capteur qu'une caméra thermique, ce qui le rend très compétitif.

Ainsi, l'invention concerne l'application de caméras de thermographies, associées à des éléments de chauffage par rayonnement, pour réaliser le tri en temps réel de divers types de produits, et notamment :

- distinction des papiers et des cartons sur la base de l'épaisseur de la première couche ;
- distinction d'emballages plastiques monocouches et multicouches ;
- distinction de plastiques épais (plus de 1 mm) par matériau ;
- distinction de polluants divers (plastiques, papiers, métaux, verres, minéraux) dans un flux biologique destiné au compostage.

Comme cela ressort de ce qui précède, la présente invention propose une méthode simple, adaptée au cas de produits fins et non métalliques, dont l'épaisseur s'échelonne dans la fourchette 20 $\mu$m - 2 mm.

Elle fait usage, dans ses applications préférées, des phénomènes physiques suivants :

- la capacité calorifique par unité de surface est directement proportionnelle à l'épaisseur de la couche superficielle du matériau chauffé, et donc pour un niveau de rayonnement donné en surface, l'élévation de température à l'équilibre est inversement proportionnelle à cette épaisseur. On peut en déduire l'épaisseur pour un matériau connu ;
- les temps nécessaires pour atteindre l'équilibre thermique sont suffisamment courts (inférieurs à 500 ms) pour que les autres phénomènes thermiques (conduction latérale, refroidissement par rayonnement ou convection) restent négligeables ;
- les épaisseurs sont suffisantes pour assurer une absorption quasi totale de la radiation d'échauffement, au moins pour certaines longueurs d'onde. En dessous de 20 $\mu$m, ces conditions ne sont plus respectées.

On peut ainsi distinguer des produits par leur épaisseur dans le but de les trier dans des catégories différentes. Les temps entre échauffement et détection sont par ailleurs assez courts pour permettre une décision rapide, et un tri en temps réel avec une machine compacte, même pour des produits en défilement rapide.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé automatique d'inspection et de tri d'objets non métalliques, appartenant à au moins deux catégories différentes et défilant selon un flux sensiblement monocouche sur un plan de convoyage d'un convoyeur,
   ledit procédé consistant essentiellement à soumettre temporairement une couche superficielle ou extérieure (4) desdits objets (1) au rayonnement calorique d'au moins un moyen (5) de chauffage à distance, de manière à délivrer à chacun de ces objets défilants (1) une impulsion thermique non altérante, qui est identique pour tous les objets en termes d'énergie thermique appliquée par unité de surface dans le plan de convoyage (2), puis à acquérir au moins une image thermique de chacun desdits objets par l'intermédiaire d'au moins un capteur thermique (6) linéaire ou matriciel, par exemple une caméra thermique, ce après écoulement d'une durée déterminée suite à l'application de l'impulsion thermique, à classer ou à catégoriser ensuite chaque objet défilant (1) en fonction des données contenues dans son ou ses image(s) thermique(s) et à délivrer un signal de commande ou d'actionnement pour chaque objet et, enfin, à séparer les objets défilants (1) en fonction de leur classe ou catégorie et/ou du signal de commande ou d'actionnement délivré correspondant,
   procédé **caractérisé :**

   **en ce que** les données de l'image ou des images thermique(s) de chaque objet défilant (1) sont traitées pour réaliser une discrimination ou une caractérisation des objets en termes d'épaisseur de la couche superficielle (4) affectée par le rayonnement, le matériau constitutif de ladite couche superficielle (4) au moins des objets défilants (1) étant identique pour tous les objets,
   **en ce que**, pour un objet (1) donné, la durée s'écoulant entre l'application du ou des rayonnement(s) chauffant(s) et la ou les prise(s) de vue(s) thermique(s) est, d'une part, suffisante pour aboutir à une répartition sensiblement homogène de l'énergie calorique absorbée dans ladite couche superficielle (4), de telle manière que la différence de température après échauffement en surface desdits objets, soit sensiblement inversement proportionnelle à l'épaisseur de cette couche superficielle (4), tout en étant, d'autre part, suffisamment courte pour que les phénomènes de diffusion thermique latérale, de refroidissement par rayonnement et de convection soient négligeables.

2. Procédé selon la revendication 1, **caractérisé en ce que** la discrimination ou la caractérisation desdits objets défilants (1) est réalisée sur la base de données différentielles, ou par exploitation différentielle de données, obtenues soit à partir d'images thermiques prises avant et après application du rayonnement calorique émis par le moyen de chauffage (5), soit à partir de la seule image thermique prise après application.

3. Procédé selon la revendication 1 ou 2, **caractérisé en ce que** l'impulsion thermique affecte la couche superficielle (4) exposée de chaque objet défilant (1), sur toute sa surface ou par zones.

4. Procédé selon l'une quelconque des revendications 1 à 3, **caractérisé en ce que** la couche superficielle (4) concernée pour réaliser la discrimination ou la catégorisation des objets (1) présente une épaisseur supérieure à 20 μm, avantageusement comprise entre 20 μm et 2 mm, préférentiellement comprise entre 30 μm et 1 mm, et **en ce que** la durée s'écoulant entre l'application du rayonnement calorique et la prise de vue thermique est de l'ordre de quelques dixièmes de seconde, préférentiellement comprise entre 50 ms et 600 ms, plus préférentiellement entre 250 et 400 ms.

5. Procédé selon l'une quelconque des revendications 1 à 4, **caractérisé en ce qu'**il consiste également à prendre une image thermique partielle ou totale de chaque objet défilant (1) avant son exposition au rayonnement du moyen de chauffage (5), la discrimination ou la caractérisation desdits objets défilants (1) étant réalisée sur la base des données différentielles obtenues à partir desdites images thermiques prises avant et après application du rayonnement calorique émis par le moyen de chauffage (5), les images avant et après exposition étant prises par le même capteur thermique (6) ou par deux capteurs différents.

6. Procédé selon l'une quelconque des revendications 1 à 5, **caractérisé en ce que** le dépôt d'énergie calorique résultant de l'application du rayonnement émis par le moyen de chauffage (5) est sensiblement uniforme et homogène sur toute la surface exposée (7) au niveau du plan de convoyage (2).

7. Procédé selon l'une quelconque des revendications 1 à 6, **caractérisé en ce que** le dépôt d'énergie calorique effectué par le rayonnement émis par le moyen de chauffage (5) est de nature discontinue et limité à des zones localisées de la surface exposée (7) au niveau du plan de convoyage (2), telles que par exemple des segments de lignes ou de bandes s'étendant dans la direction de défilement des objets ou de déplacement du convoyeur (3), éventuellement circonscrit aux régions correspondant à des objets (1) en défilement.

8. Procédé selon la revendication 7, **caractérisé en ce que** la discrimination ou la caractérisation de chaque objet défilant (1) est réalisée sur la base de la seule image thermique prise après exposition, par exploitation différentielle des données des zones irradiées et non irradiées de la surface, et donc de la couche superficielle (4), exposée de l'objet concerné.

9. Procédé selon l'une quelconque des revendications 1 à 8, **caractérisé en ce que** le rayonnement calorique est un rayonnement focalisé, préférentiellement du type infrarouge ou à composant infrarouge majoritaire, et est délivré par l'intermédiaire d'un moyen d'application (8) situé à une distance minimale au moins au dessus du plan de convoyage (2), en particulier au moins légèrement supérieure à la hauteur maximale des objets défilants (1).

10. Procédé selon la revendication 9, **caractérisé en ce que** la part du rayonnement calorique produit par le moyen de chauffage (5) et dirigé vers le plan de convoyage (2) est bloquée par un cache réfléchissant (5''') de telle manière que l'ensemble du rayonnement émis par ledit moyen de chauffage (5) soit appliqué sur la surface exposée (7) du plan de convoyage (2) par un élément réflecteur et concentrateur faisant partie dudit moyen de chauffage (5) et formant moyen d'application (8).

11. Procédé selon l'une quelconque des revendications 1 à 10, **caractérisé en ce qu'**il consiste à acquérir des données supplémentaires concernant les objets défilants (1) par l'intermédiaire d'au moins un capteur additionnel (10), par exemple choisi dans le groupe formé par les détecteurs magnétiques, les spectromètres et les caméras de vision noir et blanc ou couleur, et **en ce que** les résultats de l'exploitation de ces données supplémentaires sont combinés aux résultats de l'exploitation des données contenues dans l'image ou les images thermique(s) pour réaliser la discrimination ou la caractérisation desdits objets défilants (1).

12. Machine automatique d'inspection et de tri d'objets non métalliques, appartenant à au moins deux catégories différentes et défilant dans un flux sensiblement monocouche sur un plan de convoyage d'un convoyeur, permettant de réaliser au moins un type de discrimination ou de caractérisation au niveau de ces objets,

cette machine (11) comprenant, d'une part, au moins un moyen (5) de chauffage à distance apte à soumettre temporairement une couche superficielle ou extérieure (4) desdits objets défilants (1) à son rayonnement calorique de manière à délivrer à chacun de ces objets défilants une impulsion thermique non altérante, qui est identique pour tous ces objets en termes d'énergie thermique appliquée par unité de surface dans le plan de convoyage (2), d'autre part, au moins un capteur thermique (6) linéaire ou matriciel, par exemple une caméra thermique, disposé à une distance déterminée en aval dudit au moins un moyen de chauffage (5) dans le sens de défilement et apte à acquérir au moins une image thermique de chacun desdits objets et, enfin, au moins une unité de traitement (12) apte à classer ou à catégoriser chaque objet défilant (1) en fonction des données contenues dans son ou ses image(s) thermique(s) et à délivrer un signal de commande ou d'actionnement pour chaque objet, ladite au moins une unité de traitement (12) étant reliée à au moins un moyen (13) apte à séparer lesdits objets défilants (1) en fonction de leur catégorie ou classe et du signal de commande ou d'actionnement délivré correspondant,

machine **caractérisée :**

> **en ce que** la distance (d) séparant la zone d'application du ou de chaque rayonnement thermique, ou zone de chauffage (7), de la ou chaque zone (7') de prise de vue thermique respectivement associée est, d'une part, suffisamment longue pour que l'énergie calorique absorbée dans une couche superficielle (4) de ou du matériau constitutif de chaque objet défilant (1) présente une répartition sensiblement homogène dans cette couche et, d'autre part, suffisamment courte pour que les effets des phénomènes de diffusion thermique latérale, de refroidissement par rayonnement et de convection soient négligeables,
>
> **en ce que** les données de l'image ou des images thermique(s) de chaque objet défilant (1) sont traitées pour réaliser une discrimination ou une caractérisation des objets en termes d'épaisseur de ladite couche superficielle (4), le matériau constitutif de la couche superficielle (4) au moins des objets (1) défilants étant identique pour tous les objets.

13. Machine selon la revendication 12, **caractérisée en ce que** l'unité de traitement (12) réalise la discrimination ou la caractérisation desdits objets défilants (1) sur la base de données différentielles, ou par exploitation différentielle de données, obtenues soit à partir d'images thermiques prises avant et après application du rayonnement calorique émis par le moyen de chauffage (5), soit à partir de la seule image thermique prise après application.

14. Machine selon la revendication 12 ou 13, **caractérisée en ce que** la bande du convoyeur (3) formant le plan de convoyage (2) présente une vitesse de déplacement constante, **en ce que** ledit au moins un moyen de chauffage (5) et ledit au moins un capteur thermique (6) sont disposés au dessus dudit plan de convoyage (2).

15. Machine selon la revendication 14, **caractérisée en ce que** le moyen de chauffage (5) est constitué par l'association, d'une part, d'une source de rayonnement (5 ") à foyer tubulaire ou d'un alignement de sources de rayonnement à foyers sensiblement ponctuels ou allongés avec, d'autre part, un élément (8) déflecteur et concentrateur de rayonnement (5'), et **en ce que** les deux composants précités (5" et 8) formant ledit moyen de chauffage (5) présentent une extension profilée, s'étendent transversalement sur une partie substantielle de la largeur du plan de convoyage (2), préférentiellement sensiblement sur toute cette largeur, et réalisent en coopération mutuelle un dépôt d'énergie calorique sensiblement uniforme et homogène sur toute la surface d'une zone de chauffage (7) en forme de bande du plan de convoyage (2) recevant le rayonnement focalisé.

16. Machine selon la revendication 15, **caractérisée en ce que** la source de rayonnement tubulaire (5") consiste en un tube radiant comportant un cache ou une couche (5"') réfléchissante, par exemple sous la forme d'un dépôt métallique, sur la surface dudit tube (5") tournée vers le plan de convoyage (2), de telle manière que la totalité du rayonnement émis soit dirigée vers ledit plan de convoyage (2) par l'élément (8) déflecteur et concentrateur associé audit tube radiant (5"), par exemple du type émettant un rayonnement dans le moyen infrarouge, préférentiellement avec des longueurs d'onde supérieures à 2000 nm.

17. Machine selon l'une quelconque des revendications 12 à 16, **caractérisée en ce que** le ou les capteur (s) thermique(s) (6) effectue(nt), pour chaque objet défilant (1), une prise de vue avant et après exposition dudit objet au ou à un rayonnement calorique (5') et **en ce que** l'unité de traitement (12) réalise une discrimination ou une catégorisation desdits objets défilants (1) sur la base des données différentielles obtenues à partir de leurs images thermiques acquises avant et après exposition audit rayonnement calorique (5').

**18.** Machine selon l'une quelconque des revendications 12 à 14, **caractérisée en ce que** le moyen de chauffage (5) consiste en une source laser (5"), du type à émission continue ou intermittente, associée à un dispositif (8) d'application avec balayage bidimensionnel, le dépôt d'énergie calorique étant de nature discontinue et limité à des zones localisées de la surface exposée (7) au niveau du plan de convoyage (2), telles que par exemple des segments de lignes ou de bandes s'étendant dans la direction de défilement des objets ou de déplacement du convoyeur (3), éventuellement circonscrit aux régions correspondant à des objets (1) en défilement.

**19.** Machine selon la revendication 18, **caractérisée en ce que** l'unité de traitement (12) réalise une discrimination ou une caractérisation de chaque objet défilant (1) sur la base de la seule image thermique prise après exposition, par exploitation différentielle des données des zones irradiées et non irradiées de la surface (7), et donc de la partie de la couche superficielle (4), exposée de l'objet concerné.

**20.** Machine selon l'une quelconque des revendications 18 et 19, **caractérisée en ce qu'**elle comporte en outre un dispositif de localisation et de délimitation de la surface apparente des objets défilants (1) sur le plan de convoyage (2) situé en amont du moyen de chauffage (5) dans le sens de défilement, les données acquises par ce dispositif de localisation et de délimitation de la surface apparente étant exploitées pour piloter ledit moyen de chauffage (5) sous forme d'un ensemble [source laser (5") /dispositif d'application (8) avec balayage].

**21.** Machine selon l'une quelconque des revendications 12 à 20, **caractérisée en ce qu'**elle comporte en outre au moins un capteur additionnel (10) choisi dans le groupe formé par les détecteurs magnétiques, les spectromètres, les caméras de vision noir et blanc ou couleur, et **en ce que** les résultats de l'exploitation de ces données supplémentaires sont combinés dans l'unité de traitement (12) aux résultats de l'exploitation des données contenues dans l'image ou les images thermique(s) pour réaliser la discrimination ou la caractérisation desdits objets défilants (1).

**Claims**

**1.** Automatic process for inspecting and sorting non-metallic objects that belong to at least two different categories and pass in an essentially single-layer stream on a conveying plane of a conveyor belt, whereby said process consists essentially in temporarily subjecting a surface or outside layer (4) of said objects (1) to the caloric radiation of at least one remote heating means (5), so as to deliver to each of these passing objects (1) a non-alternating heat pulse that is identical for all of the objects in terms of heat energy applied per unit of surface area in the conveying plane (2), then to acquire at least one thermal image of each of said objects by means of at least one linear or matrix thermal sensor (6), for example a thermal camera, this after a determined length of time has elapsed following the application of the heat pulse, then to classify or to categorize each passing object (1) based on data contained in its thermal image or images and to deliver a control or actuation signal for each object and, finally, to separate the passing objects (1) based on their class or category and/or the corresponding control or actuation signal that is delivered,

process **characterized:**

**in that** the data of the image or the thermal image(s) from each passing object (1) are processed to perform discrimination or characterization of the objects in terms of the thickness of the surface layer (4) affected by the radiation, whereby the constituent material of said surface layer (4) at least of the passing objects (1) is identical for all of the objects,

**in that** for a given object (1), the length of time that elapses between the application of the heating radiation and thermal imaging is, on the one hand, sufficient for ending in an essentially homogeneous distribution of the caloric energy that is absorbed in said surface layer (4) such that the temperature difference after heating said objects on the surface is essentially inversely proportional to the thickness of this surface layer (4), while being, in contrast, short enough so that the phenomena of lateral thermal diffusion, cooling by radiation and convection are negligible.

**2.** Process according to claim 1, wherein the discrimination or the characterization of said passing objects (1) is carried out on the basis of differential data or by differential exploitation of data, obtained either from thermal images that are taken before and after application of the caloric radiation that is emitted by the heating means (5) or from the single thermal image taken after application.

**3.** Process according to claim 1 or 2, wherein the heat pulse affects the exposed surface layer (4) of each passing object (1) over its entire surface or in certain zones.

**4.** Process according to any of claims 1 to 3, wherein the surface layer (4) in question for performing the discrimination or the categorization of the objects (1) has a thickness of more than 20 $\mu$m, advantageously between 20 $\mu$m and 2 mm, preferably between 30 $\mu$m and 1 mm, and wherein the length of time that elapses between the application of the caloric radiation and the thermal imaging is on the order of several tenths of a second, preferably between 50 ms and 600 ms, more preferably between 250 and 400 ms.

5. Process according to any of claims 1 to 4, wherein it also consists in partial or total thermal imaging of each passing object (1) before its exposure to the radiation of the heating means (5), whereby the discrimination or the characterization of said passing objects (1) is performed on the basis of the differential data that are obtained from said thermal images taken before and after application of the caloric radiation emitted by the heating means (5), whereby the images before and after exposure are taken by the same thermal sensor (6) or by two different sensors.

6. Process according to any of claims 1 to 5, wherein the deposit of caloric energy that results from the application of the radiation that is emitted by the heating means (5) is essentially uniform and spread out evenly over the entire exposed surface (7) at the level of the conveying plane (2).

7. Process according to any of claims 1 to 6, wherein the deposit of caloric energy that is carried out by the radiation that is emitted by the heating means (5) is by nature intermittent and is limited to localized zones of the exposed surface (7) at the level of the conveying plane (2), such as, for example, segments of lines or bands that extend in the direction in which the objects pass or the conveyor belt (3) moves, optionally circumscribed in the regions corresponding to objects (1) as they pass.

8. Process according to claim 7, wherein the discrimination or the characterization of each passing object (1) is performed on the basis of the single thermal image taken after exposure, by differential exploitation of the data of the irradiated and non-irradiated zones of the surface, and therefore of the exposed surface layer (4) of the object in question.

9. Process according to any of claims 1 to 8, wherein the caloric radiation is a focused radiation, preferably of the infra-red type or with a majority infra-red component, and it is delivered by means of an application means (8) that is located at at least a minimum distance above the conveying plane (2), in particular at least slightly higher than the maximum height of the passing objects (1).

10. Process according to claim 9, wherein the portion of the caloric radiation that is produced by the heating means (5) and directed toward the conveying plane (2) is blocked by a reflective mask (5''') such that the entire radiation emitted by said heating means (5) is applied to the exposed surface (7) of the conveying plane (2) by a reflective and concentrating element that forms part of said heating means (5) and forms an application means (8).

11. Process according to any of claims 1 to 10, wherein it consists in acquiring additional data relating to the passing objects (1) by means of at least one additional sensor (10), for example selected from the group that is formed by magnetic detectors, spectrometers, and black and white or color vision cameras, and wherein the results of the exploitation of these additional data are combined with the results of the exploitation of the data contained in the thermal image or images to perform the discrimination or the characterization of said passing objects (1).

12. Automatic machine for inspecting and sorting non-metallic objects, belonging to at least two different categories and passing in an essentially single-layer stream on a conveying plane of a conveyor belt, making it possible to perform at least one type of discrimination or characterization at the level of these objects,
whereby this machine (11) comprises, on the one hand, at least one remote heating means (5) that can temporarily subject a surface or outside layer (4) of said passing objects (1) to its caloric radiation so as to deliver to each of these passing objects a non-alternating heat pulse that is identical for all of these objects in terms of thermal energy that is applied per unit of surface area in the conveying plane (2), and, on the other hand, at least one linear or matrix thermal sensor (6), for example a thermal camera, placed at a determined distance downstream from said at least one heating means (5) in the direction of passing and able to acquire at least one thermal image of each of said objects and, finally, at least one processing unit (12) that is able to classify or to categorize each passing object (1) based on the data contained in its thermal image or images and to deliver a control or actuation signal for each object, whereby said at least one processing unit (12) is connected to at least one means (13) that can separate said passing objects (1) based on their category or class and the corresponding control or actuation signal that is delivered,
machine:
wherein the distance (d) that separates the zone in which the thermal radiation or each thermal radiation is applied, or the heating zone (7), from the zone in which the respectively associated thermal imaging zone or each respectively associated thermal imaging zone (7') is applied, is, on the one hand, long enough so that the caloric energy that is absorbed in a surface layer (4) of the constituent material of each passing object (1) has an essentially homogenous distribution in this layer, and, on the other hand, short enough so that the effects of the phenomena of lateral thermal diffusion, cooling by radiation and convection are negligible, wherein the data of the thermal image or images from each passing object (1) are processed to perform discrimination or characterization of the objects in terms of the thickness of said surface layer (4), whereby the constituent material of the surface layer (4) at least of the passing objects (1) is identical for all of the objects.

13. Machine according to claim 12, wherein the processing unit (12) performs the discrimination or the characterization of said passing objects (1) on the basis of differential data or by differential exploitation of data, obtained either from thermal images that are taken before and after application of the caloric radiation that is emitted by the heating means (5) or from the single thermal image taken after application.

14. Machine according to claim 12 or 13, wherein the conveyor belt (3) that forms the conveying plane (2) has a constant displacement speed, wherein said at least one heating means (5) and said at least one thermal sensor (6) are placed above said conveying plane (2).

15. Machine according to claim 14, wherein the heating means (5) consists of the combination, on the one hand, of a radiation source (5") with a tubular focal point or an alignment of radiation sources with essentially specific or elongated focal points with, on the other hand, a deflector element (8) and a radiation-concentrating element (5'), and wherein the two above-mentioned components (5" and 8) that form said heating means (5) have a shaped extension, extend crosswise to a substantial portion of the width of the conveying plane (2), preferably essentially over this entire width, and carry out in mutual cooperation a deposit of essentially uniform and homogeneous caloric energy over the entire surface of a heating zone (7) in belt form of the conveying plane (2) that receives the focused radiation.

16. Machine according to claim 15, wherein the tubular radiation source (5") consists of a radiant tube that comprises a reflective mask or a layer (5'''), for example in the form of a metallic deposit, on the surface of said tube (5") that is rotated toward the conveying plane (2), such that approximately the entire radiation that is emitted is directed toward said conveying plane (2) by the deflecting and concentrating element (8) that is combined with said radiant tube (5"), for example of the type that emits a radiation in the middle infra-red range, preferably with wavelengths that are longer than 2000 nm.

17. Machine according to any of claims 12 to 16, wherein the thermal sensor or sensors (6) carries or carry out, for each passing object (1), an imaging before and after exposure of said object to a caloric radiation (5') and wherein the processing unit (12) performs discrimination or categorization of said passing objects (1) on the basis of differential data obtained from their thermal images that are acquired before and after exposure to said caloric radiation (5').

18. Machine according to any of claims 12 to 14, wherein the heating means (5) consists of a laser source (5"), of the continuous or intermittent emission type, combined with an application device (8) with two-dimensional scanning, whereby the deposit of caloric energy is of a discontinuous nature and limited to the localized zones of the exposed surface (7) at the level of the conveying plane (2), such as, for example, segments of lines or bands that extend in the direction in which the objects pass or the conveyor belt (3) moves, optionally circumscribed in the regions corresponding to objects (1) as they pass.

19. Machine according to claim 18, wherein the processing unit (12) performs discrimination or characterization of each passing object (1) on the basis of the single thermal image taken after exposure, by differential exploitation of the data of the irradiated and non-irradiated zones of the surface (7) and therefore of the exposed portion of the surface layer (4) of the object in question.

20. Machine according to any of claims 18 and 19, wherein it also comprises a device for locating and delimiting the apparent surface of the passing objects (1) on the conveying plane (2) that is located upstream from the heating means (5) in the direction of passage, whereby the data acquired by this device for locating and delimiting the apparent surface are used to control said heating means (5) in the form of a [laser source (5")/application device (8) with scanning] unit.

21. Machine according to any of claims 12 to 20, wherein it also comprises at least one additional sensor (10) that is selected from the group that is formed by magnetic detectors, spectrometers, and black and white or color vision cameras, and wherein the results of the exploitation of these additional data are combined in the processing unit (12) with the results of the exploitation of the data contained in the thermal image or images to perform the discrimination or the characterization of said passing objects (1).

**Patentansprüche**

1. Verfahren zum automatischen Prüfen und Sortieren von nicht-metallischen Gegenständen, die zumindest zu zwei verschiedenen Kategorien gehören und in einem im wesentlichen einlagigen Strom auf einer Förderebene eines Förderers wandern,

wobei das Verfahren im wesentlichen darin besteht, eine Oberflächen- oder Außenschicht (4) der Gegenstände (1) mit Hilfe zumindest eines entfernten Heizmittels (5) einer Wärmestrahlung auszusetzen, um jedem der vorbeiwandernden Gegenstände (1) einen unveränderten Wärmeimpuls zu erteilen, der für alle Gegenstände hinsichtlich der aufgebrachten Wärmeenergie pro Einheit der Oberfläche der Förderebene (2) identisch ist, sodann zumindest ein Wärmeabbild jedes dieser Gegenstände mit Hilfe zumindest eines linear oder matrixmäßig ausgebildeten Wärmefühlers (6), beispielsweise eine Wärmekamera, zu gewinnen, dies nach dem Verstreichen einer vorbestimmten Zeitspanne, die auf die Wärmeimpulsaufbringung folgt, um sodann jeden vorbeiwandernden Gegenstand (1) in Abhängigkeit von der in seinem Wärmeabbild bzw. seinen Wärmeabbildern enthaltenen Informationen zu klassifizieren oder zu kategorisieren, und für jeden Gegenstand ein Steuer- oder Betätigungssignal zu liefern, und sodann die vorbeiwandernden Gegenstände (1) in Abhängigkeit von ihrer Klasse oder Kategorie und/ oder des Steuer- oder Betätigungssignals des entsprechenden Steuer- oder Betätigungssignals zu trennen,

wobei das Verfahren **dadurch gekennzeichnet ist:**

**daß** die Daten des Wärmeabbildes bzw. der Wärmeabbilder jedes vorbeiwandernden Gegenstandes (1) behandelt werden, um eine Entscheidung oder Charakterisierung des Gegenstandes hinsichtlich der Dicke der von der Strahlung beaufschlagten Oberflächenschicht (4) zu bewirken, wobei das die Oberflächenschicht (4) bildende Material zumindest der vorbeiwandernden Gegenstände für alle Gegenstände identisch ist,

**daß** für einen gegebenen Gegenstand (1) die Zeitspanne zwischen dem Aufbringen der Heizstrahlung(en) und dem Aufnehmen des Wärmeabbildes bzw. der Wärmeabbilder einerseits ausreicht, um eine im wesentlichen homogene Verteilung der in der Oberflächenschicht (4) absorbierten Wärmeenergie zu erzielen, derart, daß die Temperaturdifferenz nach dem Erhitzen der Oberfläche dieser Gegenstände entweder im wesentlichen umgekehrt proportional zur Dicke der Oberflächenschicht (4) ist, und anderseits ausreichend kurz, damit die seitlichen Wärmediffusionsphänomene, die Abkühlung durch Abstrahlung und die Konvektion vernachlässigbar sind.

**2.** Verfahren nach Anspruch 1, **dadurch gekennzeichnet, daß** die Unterscheidung oder Charakterisierung der vorbeiwandernden Gegenstände (1) auf der Basis der differentiellen Daten bewirkt wird, oder durch differentielle Ausnutzung der Daten, die von den Wärmeabbildern erhalten werden, die entweder vor oder nach dem Aufbringen der Wärmestrahlung durch die Heizmittel (5) aufgenommen werden, oder ausgehend von dem einzigen Wärmeabbild, das nach dem Aufbringen der Strahlung aufgenommen wird.

**3.** Verfahren nach Anspruch 1 oder 2, **dadurch gekennzeichnet, daß** der Wärmeimpuls die exponierte Oberflächenschicht (4) jedes vorbeiwandernden Gegenstandes (1) über deren ganze Fläche oder zonenweise beaufschlagt.

**4.** Verfahren nach einem der Ansprüche 1 bis 3, **dadurch gekennzeichnet, daß** die betreffende Oberflächenschicht (4) zum Ausführen der Unterscheidung oder Kategorisierung der Gegenstände (1) eine Dicke größer als 20 $\mu$m hat, vorteilhaft zwischen 20 $\mu$m und 2 mm, bevorzugt zwischen 30 $\mu$m und 1 mm, und daß die Zeitdauer zwischen dem Aufbringen der Wärmestrahlung und der Aufnahme des Wärmeabbildes in der Größenordnung von einigen Zehntelsekunden, vorzugsweise zwischen 50 und 600 ms, noch bevorzugter zwischen 250 und 400 ms liegt.

**5.** Verfahren nach einem der Ansprüche 1 bis 4, **dadurch gekennzeichnet, daß** es auch darin besteht, ein teilweise Wärmeabbild oder ein Gesamtabbild jedes vorbeiwandernden Gegenstandes (1) aufzunehmen, bevor dieser der Strahlung durch die Heizmittel (5) ausgesetzt wird, wobei die Unterscheidung oder Charakterisierung dieser vorbeiwandernden Gegenstände (1) auf Basis der Differenzdaten vorgenommen wird, die aus den Wärmeabbildern gewonnen werden, welche vor und nach dem Aufbringen der von den Heizmitteln (5) abgegebenen Wärmestrahlung aufgenommen werden, wobei die Abbilder bevor und nachdem die Gegenstände der Wärmestrahlung ausgesetzt werden, durch den gleichen Wärmefühler (6) oder durch zwei verschiedene Fühler aufgenommen werden.

**6.** Verfahren nach einem der Ansprüche 1 bis 5, **dadurch gekennzeichnet, daß** das Wärmeenergiedepot, das aus der von den Heizmitteln (5) abgegebenen Wärmestrahlung resultiert, im wesentlichen gleichmäßig und homogen über die ganze Oberfläche (7) auf der Höhe der Förderebene (2) verteilt ist.

**7.** Verfahren nach einem der Ansprüche 1 bis 6, **dadurch gekennzeichnet, daß** das Wärmeenergiedepot, welches durch die von den Heizmitteln (5) abgegebene Strahlung bewirkt wird, diskontinuierlicher Natur und auf lokalisierte Zonen der exponierten Oberfläche (7) auf der Höhe der Förderebene (2) beschränkt ist, wie beispielsweise Liniensegmente oder Bandsegmente, die sich in Richtung des Vorbeiwanderns der Gegenstände oder der Bewegung des Förderers (3) erstrekken, gegebenenfalls auf Bereiche begrenzt, welche den vorbeiwandernden Gegenständen (1) entsprechen.

8. Verfahren nach Anspruch 7, **dadurch gekennzeichnet, daß** die Unterscheidung oder Charakterisierung jedes vorbeiwandernden Gegenstandes (1) auf der Basis des einzigen Wärmeabbildes bewirkt wird, das nach der Exponierung durch differentielles Ausnützen der Daten der bestrahlten Zonen und der nicht bestrahlten der Oberfläche und somit der Oberflächenschicht (4), die von dem betreffenden Gegenstand exponiert ist, aufgenommen wird.

9. Verfahren nach einem der vorhergehenden Ansprüche 1 bis 8, **dadurch gekennzeichnet, daß** die Wärmestrahlung eine fokussierte Strahlung ist, vorzugsweise vom Infrarottyp oder einer Mischung mit einem Infrarot-Hauptanteil, und von einem Aufbringmittel (8) abgegeben wird, das in einem Minimalabstand zumindest oberhalb der Förderebene (2) und insbesondere zumindest geringfügig oberhalb der Maximalhöhe der vorbeiwandernden Gegenstände (1) liegt.

10. Verfahren nach Anspruch 9, **dadurch gekennzeichnet, daß** ein Teil der Wärmestrahlung, die von den Heizmitteln (5) erzeugt und gegen die Förderebene (2) gerichtet wird, durch eine reflektierende Abdeckung (5'") blockiert wird, derart, daß die Gesamtheit der von den Wärmemitteln (5) abgegebenen Strahlung entweder auf die exponierte Oberfläche (7) der Förderebene (2) durch ein Reflektorelement oder durch einen Konzentrierelement, das Teil des Heizmittels (5) ist und das Aufbringmittel (8) bildet, aufgebracht wird.

11. Verfahren nach einem der Ansprüche 1 bis 10, **dadurch gekennzeichnet, daß** es darin besteht, zusätzliche Daten betreffend die vorbeiwandernden Gegenstände (1) mit Hilfe zumindest eines zusätzlichen Fühlers (10) aufzunehmen, der beispielsweise aus der Gruppe gewählt ist, die durch Magnetdetektoren, Spektrometer und Schwarz-Weiß- oder Farbkameras gebildet ist, und daß die Resultate der Auswertung dieser zusätzlichen Daten mit den Resultaten der Auswertung der in dem Wärmeabbild bzw. in den Wärmeabbildern enthaltenen Daten kombiniert werden, um eine Unterscheidung oder Charakterisierung der vorbeiwandernden Gegenstände (1) zu erzielen.

12. Maschine zum automatischen Prüfen und Sortieren von nicht-metallischen Gegenständen, die zumindest zwei verschiedenen Kategorien angehören und auf in einem im wesentlichen einlagigen Strom auf einer Förderebene eines Förderers wandern, wobei die Maschine es gestattet, zumindest eine Art der Unterscheidung oder Charakterisierung auf der Höhe dieser Gegenstände zu verwirklichen, wobei diese Maschine (11) einerseits zumindest ein Heizmittel (5) aufweist, das aus der Ferne wirkt und befähigt ist, eine Oberflächen- oder Außenschicht (4) der vorbeiwandernden Gegenstände (1) temporär seiner Wärmestrahlung zu unterwerfen, derart, daß jedem dieser vorbeiwandernden Gegenstände ein unveränderter Wärmeimpuls erteilt wird, der für alle diese Gegenstände hinsichtlich der pro Oberflächeneinheit auf die Förderebene (2) aufgebrachten Wärmeenergie identisch ist, und anderseits zumindest einen linear oder matrixmäßig ausgebildeten Wärmefühler (6), beispielsweise eine Wärmekamera, die in einem vorbestimmten Abstand in Richtung des Vorbeiwanderns stromabwärts des zumindest einen Heizmittels (5) angeordnet und befähigt ist, zumindest ein Wärmeabbild jedes Gegenstandes aufzunehmen, und schließlich zumindest eine Behandlungseinheit (12), die befähigt ist, jeden vorbeiwandernden Gegenstand (1) in Abhängigkeit von den in seinem Wärmeabbild bzw. seinen Wärmeabbildern enthaltenen Daten zu klassieren oder zu kategorisieren und ein Steuersignal bzw. Betätigungssignal für jeden Gegenstand abzugeben, wobei die zumindest eine Behandlungseinheit (12) mit zumindest einem Mittel (13) verbunden ist, das befähigt ist, die vorbeiwandernden Gegenstände (1) in Abhängigkeit von ihrer Kategorie oder Klasse und des Steuer- oder Betätigungssignals, das dementsprechend abgegeben wird, zu trennen, wobei die Maschine **dadurch gekennzeichnet ist:**

**daß** der Abstand (d), welcher die Aufbringzone von der oder jeder Wärmestrahlung bzw. die Heizzone (7) von jeder Zone (7') trennt, die zur Aufnahme des zugeordneten Wärmeabbildes bestimmt ist, einerseits ausreichend lang ist, damit die Wärmeenergie, die in einer Oberflächenschicht (4) des Materials absorbiert ist, welches jeden vorbeiwandernden Gegenstand (1) bildet, eine im wesentlichen homogene Verteilung in dieser Schicht aufweist, und anderseits ausreichend kurz ist, damit die Phänomene der seitlichen Wärmediffusion, die Abkühlung durch Abstrahlung und die Konvektion vernachlässigbar sind,

**daß** die Daten des Wärmeabbildes bzw. der Wärmeabbilder jedes vorbeiwandernden Gegenstandes behandelt werden, um eine Unterscheidung oder Charakterisierung der Gegenstände hinsichtlich der Dicke der Oberflächenschicht (4) zu erzielen, wobei das die Oberflächenschicht (4) bildende Material zumindest der vorbeiwandernden Gegenstände (1) für alle Gegenstände identisch ist.

**13.** Maschine nach Anspruch 12, **dadurch gekennzeichnet, daß** die Behandlungseinheit (12) die Unterscheidung oder Kategorisierung der vorbeiwandernden Gegenstände (1) auf der Basis differentieller Daten bewirkt, oder durch differentielle Ausnutzung der Daten aufgenommen werden, die von den entweder vor oder nach der von den Heizmitteln (5) aufgebrachten Wärmestrahlung aufgenommenen Wärmeabbildern abgegeben wird, oder ausgehend von dem einzigen Wärmeabbild, das nach der Aufbringung aufgenommen wird.

**14.** Maschine nach Anspruch 12 oder 13, **dadurch gekennzeichnet, daß** das Förderband (3), welches die Förderebene (2) bildet, eine konstante Bewegungsgeschwindigkeit hat, und daß das zumindest eine Heizmittel (5) und der zumindest eine Wärmefühler (6) oberhalb der Förderebene (2) angeordnet sind.

**15.** Maschine nach Anspruch 14, **dadurch gekennzeichnet, daß** das Heizmittel (5) durch Zusammenwirken einerseits einer Strahlungsquelle (5") rohrförmiger Form oder einer Reihe von im wesentlichen punktförmigen oder langgestreckten Strahlungsquellen und anderseits eines Elementes (8) zur Ablenkung und Konzentration der Strahlung (5') gebildet ist, und daß die beiden vorerwähnten Komponenten (5" und 8), welche das Heizmittel (5) bilden, eine profilierte Verlängerung aufweisen, die sich quer zu einem wesentlichen Teil der Breite der Förderebene (2) erstreckt, vorzugsweise im wesentlichen über die gesamte Breite, und im gegenseitigen Zusammenwirken ein im wesentlichen gleichmäßiges und einheitliches Wärmeenergiedepot über die gesamte Oberfläche einer Heizzone (7) in Form eines Bandes auf der Ebene des Förderers (2) ergeben, welches die fokussierte Strahlung erhält.

**16.** Maschine nach Anspruch 15, **dadurch gekennzeichnet, daß** die rohrförmige Strahlungsquelle (5") aus einem Strahlungsrohr gebildet ist, das eine reflektierende Abdeckung oder Schicht (5'") aufweist, beispielsweise in Form einer Metallablagerung, auf der der Förderebene (2) zugekehrten Oberfläche des Rohres (5"), derart, daß die Gesamtheit der abgegebenen Strahlung von dem dem Strahlungsrohr (5") zugeordneten Ablenkelement (8) und Konzentrierelement auf die Förderebene (2) gerichtet wird, beispielsweise von der Art, die eine Infrarotstrahlung abgibt, vorzugsweise mit einer Wellenlänge oberhalb von 2000 nm.

**17.** Maschine nach einem der Ansprüche 12 bis 16, **dadurch gekennzeichnet, daß** der oder die Wärmefühler (6) für jeden vorbeiwandernden Gegenstand (1) vor oder nachdem der Gegenstand der Wärmestrahlung (5') ausgesetzt wurde, ein Abbild aufnimmt bzw. aufnehmen, und daß die Behandlungseinheit (12) eine Unterscheidung oder Kategorisierung dieser vorbeiwandernden Gegenstände (1) auf der Basis der differentiellen Daten vornimmt, die von den Wärmeabbildern erhalten werden, welche vor oder nachdem die Gegenstände der Wärmestrahlung (5') ausgesetzt wurden, erhalten werden.

**18.** Maschine nach einem der Ansprüche 12 bis 14, **dadurch gekennzeichnet, daß** das Heizmittel (5) aus einer Laserquelle (5") des Typs besteht, der kontinuierlich oder intermittierend Strahlung abgibt, und einer Vorrichtung (8) zum Aufbringen eines zweidimensionellen Strahlungsmusters zugeordnet ist, wobei das Wärmeenergiedepot diskontinuierlicher Natur und auf die lokalisierten Zonen der exponierten Oberfläche (7) auf der Höhe der Förderebene (2) beschränkt ist, derart, daß sich beispielsweise die Liniensegmente oder Bandsegmente in Richtung des Vorbeiwanderns der Gegenstände oder der Vorbeibewegung des Förderers (3) erstrecken, gegebenenfalls begrenzt auf entsprechende Regionen der vorbeiwandernden Gegenstände (1).

**19.** Maschine nach Anspruch 18, **dadurch gekennzeichnet, daß** die Behandlungseinheit (12) eine Unterscheidung oder Charakterisierung jedes vorbeiwandernden Gegenstandes (1) auf der Basis des einzigen Wärmeabbildes vornimmt, das nach der Wärmebestrahlung durch differentielle Auswertung der Daten der bestrahlten und nicht-bestrahlten Zonen der Oberfläche (7) und somit eines Teiles der exponierten Oberflächenschicht (4) des betreffenden Gegenstandes erhalten wird.

**20.** Maschine nach einem der Ansprüche 18 und 19, **dadurch gekennzeichnet, daß** sie ferner eine Lokalisier- und Begrenzungsvorrichtung für die sichtbare Oberfläche der vorbeiwandernden Gegenstände (1) auf der Förderebene (2) aufweist, die in Richtung des Vorbeiwanderns stromaufwärts der Heizmittel (5) angeordnet ist, wobei die von dieser Lokalisier- und Begrenzungsvorrichtung der sichtbaren Oberfläche aufgenommenen Daten ausgewertet werden, um die Heizmittel (5) als Gesamtheit zu pilotieren [Laserquelle (5") / Aufbringvorrichtung (8) mit Bandbildung].

**21.** Maschine nach einem der Ansprüche 12 bis 20, **dadurch gekennzeichnet, daß** sie ferner zumindest einen zusätzlichen Fühler (10) aufweist, der aus der Gruppe gewählt ist, die durch Magnetdetektoren, Spektrometer, Schwarz-Weiß- oder Farbkameras gebildet ist, und daß die Resultate der Auswertung dieser zusätzlichen Daten in einer Behandlungseinheit (12) mit den Auswertungsdaten kombiniert werden, die in dem Wärmeabbild bzw. den Wärmeabbildern enthalten sind, um eine Unterscheidung oder Charakterisierung der vorbeiwandernden Gegen-stände (1) zu bewirken.

Fig. 1

Fig. 2

Fig. 3

Fig. 4

**EP 1 965 929 B1**

**RÉFÉRENCES CITÉES DANS LA DESCRIPTION**

**Documents brevets cités dans la description**

- FR 2822235
- WO 02074452 A
- US 4996426 A
- US 6914678 B
- DE 4317513
- GB 2278440 A
- WO 9623604 A
- FR 2697450 A
- US 20020027943 A